(19) Europäisches Patentamt
European Patent Office
Office européen des brevets

(11) **EP 4 742 612 A1**

(12) **EUROPEAN PATENT APPLICATION**
published in accordance with Art. 153(4) EPC

(43) Date of publication:
**13.05.2026 Bulletin 2026/20**

(21) Application number: **23944049.8**

(22) Date of filing: **05.07.2023**

(51) International Patent Classification (IPC):
***H04L 41/16*** (2022.01)

(52) Cooperative Patent Classification (CPC):
**H04L 5/00; H04L 41/16; H04L 43/08**

(86) International application number:
**PCT/CN2023/105971**

(87) International publication number:
**WO 2025/007318 (09.01.2025 Gazette 2025/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventors:
• **LIU, Zhengxuan
Beijing 100085 (CN)**
• **LIU, Min
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR MONITORING PERFORMANCE OF ARTIFICIAL INTELLIGENCE (AI) MODEL, AND COMMUNICATION DEVICE, COMMUNICATION SYSTEM AND STORAGE MEDIUM**

(57) Provided in the present disclosure are a method and apparatus for monitoring the performance of an artificial intelligence (AI) model, and a communication device, a communication system and a storage medium. The method comprises: determining reference channel state information (CSI) and prediction CSI, wherein the reference CSI is used as a reference for monitoring the performance of an AI model, the prediction CSI is predicted by means of the AI model and corresponds to a first prediction moment, and both the reference CSI and the prediction CSI are used for determining performance information of the AI model. Thus, the performance of an AI model for predicting CSI can be effectively monitored.

S4101

S4101, determine reference CSI and prediction CSI, where the reference CSI is used as a reference for AI model performance monitoring, the prediction CSI is predicted by the AI model and corresponds to a first prediction time instant, and the reference CSI and the prediction CSI are used together in determining performance information of the AI model

FIG. 4A

**Description**

TECHNICAL FIELD

The disclosure relates to a field of communication technologies, in particular to methods for monitoring performance of an artificial intelligence (AI) model, apparatuses for monitoring performance of an AI model, a communication device, a communication system, and a storage medium.

BACKGROUND

With the development of artificial intelligence (AI) technology, AI has been widely applied to a wireless communication physical layer. For example, channel state information (CSI) may be predicted through AI model inference, i.e., predicting future CSI. The prediction performance of an AI model may surpass that of a non-AI model.

SUMMARY

Embodiments of the disclosure provide methods for monitoring performance of an artificial intelligent (AI) model, related apparatuses, a device, a chip system, a storage medium, a computer program, and a computer program product, which are applied in the field of communication technologies, to solve a technical problem that the performance of the AI model for CSI prediction cannot be effectively monitored.

The disclosure provides methods for monitoring performance of an AI model, apparatuses for monitoring performance of an AI model, a communication device, a communication system, and a storage medium.

According to a first aspect, embodiments of the disclosure provide a method for monitoring performance of an AI model. The method includes: determining reference channel state information (CSI) and prediction CSI, in which the reference CSI is used as a reference for AI model performance monitoring, the prediction CSI is predicted by the AI model and corresponds to a first prediction time instant, and the reference CSI and the prediction CSI are used together in determining performance information of the AI model.

According to a second aspect, embodiments of the disclosure provide a method for monitoring performance of an AI model. The method includes: determining performance information of the AI model, in which the performance information is determined from reference CSI and prediction CSI, the reference CSI is used as a reference for AI model performance monitoring, and the prediction CSI is predicted by the AI model and corresponds to a first prediction time instant.

According to a third aspect, embodiments of the disclosure provide an apparatus for monitoring performance of an AI model. The apparatus includes: a processing module configured to determine reference CSI and prediction CSI, in which the reference CSI is used as a reference for AI model performance monitoring, the prediction CSI is predicted by the AI model and corresponds to a first prediction time instant, and the reference CSI and the prediction CSI are used together in determining performance information of the AI model.

According to a fourth aspect, embodiments of the disclosure provide an apparatus for monitoring performance of an AI model. The apparatus includes: a processing module configured to determine performance information of the AI model, in which the performance information is determined from reference CSI and prediction CSI, the reference CSI is used as a reference for AI model performance monitoring, and the prediction CSI is predicted by the AI model and corresponds to a first prediction time instant.

According to a fifth aspect, embodiments of the disclosure provide a communication device. The communication device includes: one or more processors. The one or more processors are used to call instructions to cause the communication device to implement the method for monitoring performance of an AI model according to the first aspect or the method for monitoring performance of an AI model according to the second aspect.

According to a sixth aspect, embodiments of the disclosure provide a communication system. The communication system includes a network device and a terminal. The terminal is configured to implement the method for monitoring performance of an AI model according to the first aspect, and the network device is configured to implement the method for monitoring performance of an AI model according to the second aspect.

According to a seventh aspect, embodiments of the disclosure provide a storage medium having instructions stored thereon. When the instructions are executed by a communication device, the communication device is caused to implement the method for monitoring performance of an AI model according to the first aspect or the method for monitoring performance of an AI model according to the second aspect.

BRIEF DESCRIPTION OF THE DRAWINGS

In order to clearly illustrate the technical solutions of embodiments of the disclosure or background technologies, descriptions of drawings used in embodiments of the disclosure or the background technologies are given below.

FIG. 1 is a schematic structural diagram illustrating a communication system according to an embodiment of the disclosure.

FIG. 2 is a schematic diagram illustrating an observation window and a prediction window according to an embodiment of the disclosure.

FIG. 3A is an interactive schematic diagram illustrating a method for monitoring performance of an AI model according to an embodiment of the disclosure.

FIG. 3B is an interactive schematic diagram illustrating a method for monitoring performance of an AI model according to an embodiment of the disclosure.

FIG. 3C is an interactive schematic diagram illustrating a method for monitoring performance of an AI model according to an embodiment of the disclosure.

FIG. 3D is an interactive schematic diagram illustrating a method for monitoring performance of an AI model according to an embodiment of the disclosure.

FIG. 4A is an interactive schematic diagram illustrating a method for monitoring performance of an AI model according to an embodiment of the disclosure.

FIG. 4B is an interactive schematic diagram illustrating a method for monitoring performance of an AI model according to an embodiment of the disclosure.

FIG. 4C is an interactive schematic diagram illustrating a method for monitoring performance of an AI model according to an embodiment of the disclosure.

FIG. 5A is an interactive schematic diagram illustrating a method for monitoring performance of an AI model according to an embodiment of the disclosure.

FIG. 5B is an interactive schematic diagram illustrating a method for monitoring performance of an AI model according to an embodiment of the disclosure.

FIG. 5C is an interactive schematic diagram illustrating a method for monitoring performance of an AI model according to an embodiment of the disclosure.

FIG. 6 is a schematic diagram illustrating an application of the method for monitoring the performance of the AI model according to an embodiment of the disclosure.

FIG. 7 is a schematic diagram illustrating an application of the method for monitoring the performance of the AI model according to an embodiment of the disclosure.

FIG. 8A is a schematic structural diagram illustrating an apparatus for monitoring performance of an AI model according to an embodiment of the disclosure.

FIG. 8B is a schematic structural diagram illustrating an apparatus for monitoring performance of an AI model according to an embodiment of the disclosure.

FIG. 9A is a schematic structural diagram illustrating a communication device according to an embodiment of the disclosure.

FIG. 9B is a schematic structural diagram illustrating a chip according to an embodiment of the disclosure.

## DETAILED DESCRIPTION

Embodiments of the disclosure provide methods for monitoring performance of an AI model, apparatuses for monitoring performance of an AI model, a communication device, a communication system and a storage medium. In some embodiments, terms "method for monitoring performance of an AI model", "information processing method" and "communication method" are interchangeable, terms "information transmission device", "information processing device" and "communication device" are interchangeable, and terms "information processing system" and "communication system" are interchangeable.

Embodiments of the disclosure are not exhaustive, but only schematic illustrations of some embodiments, and are not taken as specific limitations on the protection scope of the disclosure. Without contradiction, in an embodiment, each step may be implemented as an independent embodiment, and steps may be combined arbitrarily. For example, the solution after removing some steps in an embodiment may also be implemented as an independent embodiment. The steps in the embodiment may be performed in different orders, and optional implementations in embodiments may be combined arbitrarily. In addition, embodiments of the disclosure may also be combined arbitrarily. For example, some or all steps of different embodiments may be combined arbitrarily, and each embodiment may be arbitrarily combined with optional implementations of other embodiments.

In embodiments of the disclosure, unless there are special explanations and logical conflicts, terms and/or descriptions of embodiments are consistent and may refer to each other, and technical features in different embodiments may be combined as a new embodiment according to their inherent logical relations.

The terms used in embodiments of the disclosure are only for the purpose of describing specific embodiments, and are not used as limitations of the disclosure.

In embodiments of the disclosure, unless otherwise specified, an element expressed in a singular form through terms such as "a", "an" "the" "the above", "said", "the above described", "this" and so on, is interpreted as that there is "one and only one", "one or more" or "at least one" of the element. For example, when an article, e.g., "a", "an" or "the" in English, is used in translation, the noun after the article can be interpreted in a singular form or in a plural form.

In embodiments of the disclosure, "a plurality of" refers to "two or more".

In some embodiments, the terms "at least one of", "one or more", "a plurality of" and "multiple" are interchangeable.

In some embodiments, "at least one of A or B", "A and/or B", "in one case A, while in another case B", and "in response to one case A, while in response to another case B" may be used in the following technical schemes depends on the specific situation: in some embodiments, A is executed independent of B; in some embodiments, B is executed independent of A; in some embodiments, A and B are selectively executed; and in some embodiments, A and B are both executed. The same applies when there are more branches such as A, B and C.

In some embodiments, "A or B" may be used in the following technical schemes depends on the condition: in some embodiments, A is executed independent of B; in some embodiments, B is executed independent of A; and in some embodiments, A and B are selectively executed. The same applies when there are more branches such as A, B and C.

The prefixes such as "first" and "second" in embodiments of the disclosure are only used to distinguish different objects, and the prefix is not intended to limit the position, order, priority, quantity or content of a certain object. For the description of the object, reference may be made to the descriptions of claims or embodiments, and should not constitute unnecessary limitations because of the use of prefix. For example, when describing a "field", the prefixes "first" and "second" in "first field" and "second field" do not indicate the positions or orders of the two fields, and do not indicate whether the "first field" and "second field" are in the same message or not, nor do they define the sequence of the "first field" and "second field". As another example, when describing a "level", the prefixes "first" and "second" in "first level" and "second level" do not limit the priorities of the levels. Moreover, an ordinal number used to describe an object does not indicate a quantity of the object, and there may be one or more of such object. Taking "first device" as an example, there may be one or more "first devices". In addition, objects with different prefixes may refer to the same object or different objects. For example, when describing a "device", "first device" and "second device" may refer to the same device or different devices, or may refer to the same device type or different device types. When describing "information", "first information" and "second information" may refer to the same information or different information, or may refer to the same content or different contents.

In some embodiments, "comprising A", "containing A", "used to indicate A" and "carrying A" may be interpreted as "directly carrying A" or "indirectly indicating A".

In some embodiments, the terms "in response to", "in response to determining", "in the case of", "when", "while", "if" and "assuming" are interchangeable.

In some embodiments, the terms "greater than", "greater than or equal to", "more than" "more than or equal to", "higher than", "higher than or equal to", "no less than", "no lower than" and "above" are interchangeable. Moreover, the terms "less than", "less than or equal to", "lower than", "lower than or equal to", "smaller than", "smaller than or equal to", "no greater than", "no higher than" and "below" are interchangeable.

In some embodiments, the apparatus may be interpreted as physical or virtual, and its name is not limited to those listed in the embodiments. The terms "apparatus", "equipment", "device", "circuit", "network element", "node", "function", "unit", "section", "system", "network", "chip", "chip system", "entity" and "body" are interchangeable.

In some embodiments, the terms "access network (AN) device", "radio AN (RAN) device", "base station (BS)", "radio BS", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier" and "bandwidth part (BWP)" are interchangeable.

In some embodiments, the terms "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client" and "client" are interchangeable.

In some embodiments, data and information are obtained by means comply with the laws and regulations of the host country.

In some embodiments, data and information are obtained with the consent of users.

In addition, each element, row or column in the tables of the embodiments of the disclosure may be implemented as an independent embodiment, or any combination of elements, rows and columns may be implemented as an independent embodiment.

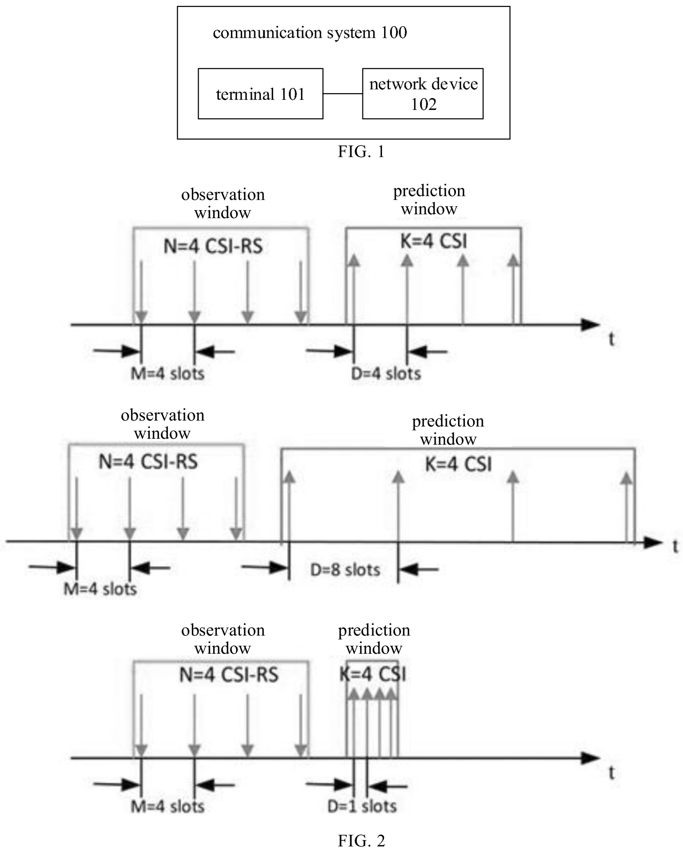

FIG. 1 is a schematic structural diagram illustrating a communication system according to an embodiment of the disclosure. As illustrated in FIG. 1, the communication system 100 includes a terminal 101 and a network device 102. The network device 102 includes at least one of an access network device or a core network device.

In some embodiments, the terminal 101 includes at least one of a mobile phone, a wearable device, an Internet of Things (IoT) device, a car with communication functions, a smart car, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home, which is not limited thereto.

In some embodiments, the AN device may be a node or a device that connects the terminal to a wireless network, and it includes at least one of an evolved Node B (eNB) in a 5th generation mobile communication system (5G), a next generation eNB (ng-eNB), a next generation NodeB (gNB), a NodeB (NB), a home NB (HNB), a home evolved NB (HeNB), a wireless backhaul equipment, a radio network controller (RNC), a BS controller (BSC), a base transceiver station (BTS), a base band unit (BBU), a mobile switching center, a BS in a 6G communication system, an Open RAN, a Cloud RAN, a BS in other communication systems, or an access node in a wireless fidelity (Wi-Fi) system, which is not limited thereto.

In some embodiments, the technical solution of the disclosure is applied to the Open RAN. In this case, interfaces between the access network devices or interfaces within the AN device involved in the embodiments of the disclosure may be used as internal interfaces of the Open RAN. The procedures and information interactions between these internal interfaces are implemented by software or programs.

In some embodiments, the access network device is composed of a central unit (CU) and distributed units (DUs), and "CU" may also be the abbreviation of control unit. The use of the CU-DU structure allows to divide a protocol layer of the AN device, such that some functions of the protocol layer are placed in the CU for centralized control, and some or all of the remaining functions of the protocol layer are distributed in the DUs that are centrally controlled by the CU, which is not limited thereto.

In some embodiments, the core network device may be a device including one or more network elements, or a plurality of devices or groups of devices, each including all or part of the above one or more network elements. The network elements may be virtual or physical. For example, the core network includes at least one of an evolved packet core (EPC), a 5G core network (CN) or a next generation core (NGC).

It is understandable that to clearly illustrate the technical solution of embodiments of the disclosure, its applicable communication system is introduced firstly in embodiments of the disclosure, which does not constitute as a limitation on the technical solution according to embodiments of the disclosure. Those skilled in the art understand that as system architectures evolve and new business scenarios emerge, the technical solution according to embodiments of the disclosure is also applicable to similar technical problems.

The following embodiments of the disclosure are applied to the entire or a portion of the communication system 100 illustrated in FIG. 1, which is not limited herein. The entities in the system illustrated in FIG. 1 are examples. The communication system may include all or part of the entities in FIG. 1, and may also include entities not illustrated in FIG. 1. The quantities and forms of these entities are arbitrary, and the connection relationships between the entities are illustrated as examples. The entities may or may not be connected, and the entities may be connected by any means, e.g., directly or indirectly, or in a wired manner or wirelessly.

Embodiments of the disclosure may be applied to a long-term evolution (LTE) system, an LTE-Advanced (LTE-A) system, an LTE-Beyond (LTE-B) system, a SUPER 3G system, an IMT-Advanced system, a 4th generation (4G) mobile communication system, a 5G system, a 5G new radio (NR) system, a future radio access (FRA) system, a new-radio access technology (RAT) system, a NR system, a new radio access (NX) system, a future generation radio access (FX) system, a global system for mobile communications (GSM), a CDMA2000, an ultra mobile broadband (UMB), an IEEE 802.11(Wi-Fi®), an IEEE 802.16 (WiMAX®), an IEEE 802.20, an ultra-wideband (UWB), a Bluetooth®, a public land mobile network (PLMN), a device-to-device (D2D) system, a machine-to-machine (M2M) system, an IoT system, a vehicle-to-everything (V2X) system, systems using other communication methods or their next generation systems. In addition, multiple systems may be combined for applications, such as a combination of the LTE/LTE-A system and 5G.

In some embodiments, CSI prediction based on an AI model (or called AI model-based CSI prediction) and CSI prediction that is not based on an AI model (or called non-AI model-based CSI prediction) both use historical CSI at previous time instants.

In some embodiments, downlink channel information is estimated based on historical CSI reference signals (CSI-RSs) sent at previous time instants, and a range where the previous time instants are included is referred to as an observation window.

In some embodiments, CSI may be predicted for multiple future time instants, and a range where these future time instants are included is referred to as a prediction window.

In some embodiments, as illustrated in FIG. 2, FIG. 2 is a schematic diagram illustrating an observation window and a prediction window according to an embodiment of the disclosure. FIG. 2 illustrates a schematic diagram of CSI predicted for future time instants within the prediction window based on historical CSI at previous time instants within the observation window with different parameter configurations, and the parameters are defined as follows:

N represents the number of time instants within the observation window at which the CSI-RSs have been transmitted, where N = 4, 5, 8 or 10;

M represents an interval between adjacent CSI-RSs, where M = 2.5 slots, 4 slots, or 5 slots;

K represents the number of time instants at which the CSI is predicted within the prediction window, where K = 1, 3, or 4; and

D represents a CSI interval between adjacent prediction time instants within the prediction window, where D = 1 slots, 2.5 slots, 4 slots, 5 slots, or 8 slots.

A duration of the prediction window $w_d = K \cdot D$.

In some embodiments, for the AI model-based CSI prediction, the performance of the AI model may be monitored.

In some embodiments, in a case where it is determined that the performance of AI model inference is getting worse, the current AI model may be deactivated or is switched to a new AI model, and the CSI prediction is performed based on the new AI model or rolls back to the non-AI model-based CSI prediction .

In embodiments of the disclosure, the performance monitoring of the AI model used for CSI prediction is effectively implemented to prevent the prediction performance from decreasing.

In embodiments of the disclosure, the performance monitoring of the AI model at the terminal side is implemented by using the downlink RS(s) sent within the prediction window or by using the non-AI-based CSI prediction as a reference.

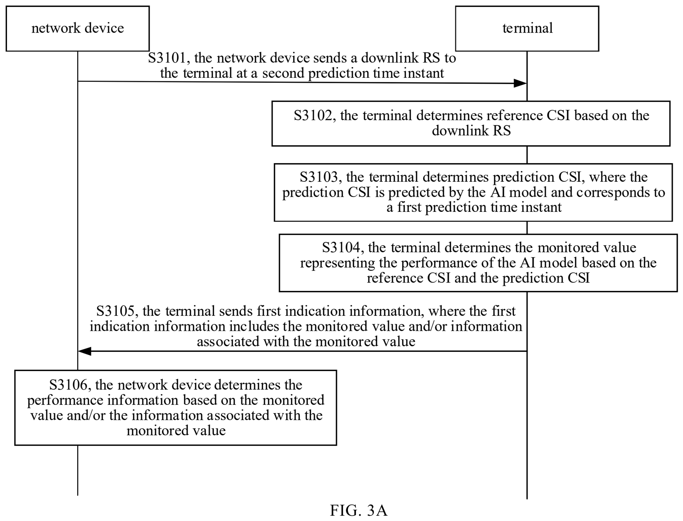

FIG. 3A is an interactive schematic diagram illustrating a method for monitoring performance of an AI model according to an embodiment of the disclosure. As illustrated in FIG. 3A, embodiments of the disclosure relate to a method for monitoring performance of an AI model. The method is performed by the communication system 100, and includes the following.

At step S3101, a network device sends downlink RS(s) to the terminal at second prediction time instant(s).

In some embodiments, the terminal receives the downlink RS(s) sent by the network device at the second prediction time instant(s).

In some embodiments, a time instant at which CSI is to be predicted is referred to as a prediction time instant.

In some embodiments, corresponding CSI is predicted based on a downlink RS sent by the network device at a prediction time instant, and this prediction time instant is called the second prediction time instant.

In some embodiments, there may be one or more second prediction time instants.

In some embodiments, the terminal receives a downlink RS sent by the network device at one second prediction time instant.

In some embodiments, the terminal receives a plurality of downlink RSs sent by the network device at a plurality of second prediction time instants, respectively.

In some embodiments, the downlink RS(s) may be RS resource(s) that recur over M (e.g., M≥1) period(s), N (e.g., N≥1) reference aperiodic RS resource(s), or a combination of RS resource(s) that recur over M period(s) and N aperiodic RS resource(s). M and N are positive integers greater than or equal to 1.

In some embodiments, the RS resource may be a CSI-RS resource or a demodulation RS (DMRS) resource.

In some embodiments, the second prediction time instant(s) is/are within a prediction window.

In some embodiments, in a case where there is one second prediction time instant, the second prediction time instant is a first one of time instants within the prediction window, a $\left\lceil \dfrac{w_d}{2} \right\rceil$ th time instant within the prediction window, a $\left\lfloor \dfrac{w_d}{2} \right\rfloor$ th time instant within the prediction window, or a last one of time instants within the prediction window, where $w_d$ represents a duration of the prediction window, $\lceil \ \rceil$ means a ceiling function (or called rounding up), and $\lfloor \ \rfloor$ means a flooring function (or called rounding down).

In some embodiments, in a case where there are two second prediction time instants, the second prediction time instants include a first one of time instants within the prediction window and a $\left\lceil \dfrac{w_d}{2} \right\rceil$ th time instant within the prediction window, a first one of time instants within the prediction window and a $\left\lfloor \dfrac{w_d}{2} \right\rfloor$ th time instant within the prediction window, a $\left\lceil \dfrac{w_d}{2} \right\rceil$ th time instant within the prediction window and a last one of time instants within the prediction window, a $\left\lfloor \dfrac{w_d}{2} \right\rfloor$ th time instant within the prediction window and a last one of time instants within the prediction window, or a first one of time instants within the prediction window and a last one of time instants within the prediction window, where $w_d$ represents a duration of the prediction window, $\lceil \ \rceil$ means a ceiling function, and $\lfloor \ \rfloor$ means a flooring function.

In some embodiments, in a case where there are more than two second prediction time instants, the second prediction time instants include a ( $\left\lceil \frac{w_d}{L} \right\rceil (l-1) + 1$ )th time instant within the prediction window or a ( $\left\lceil \frac{w_d}{2} \right\rceil (l-1) + 1$ )th time instant within the prediction window, where $l$ = 1, ..., L, L represents the number of second prediction time instants, $w_d$ represents a duration of the prediction window, $\lceil\ \rceil$ means a ceiling function, and $\lfloor\ \rfloor$ means a flooring function.

Therefore, one or more second prediction time instants may be determined flexibly and accurately, which is effectively applicable to personalized communication systems. Moreover, in a case where the CSI used as the reference for AI model performance monitoring is determined based on a downlink RS sent by the network device at a second prediction time instant, the accuracy may be effectively improved.

At step S3102, the terminal determines reference CSI based on the downlink RS(s).

In some embodiments, the reference CSI is used as a reference for AI model performance monitoring.

In some embodiments, CSI estimated based on the downlink RS is referred to as the reference CSI.

In some embodiments, the CSI estimated based on the downlink RS is used as the reference CSI for monitoring the performance of the AI model.

In some embodiments, one reference CSI is estimated based on one downlink RS, or multiple reference CSI may be estimated based on multiple downlink RSs respectively.

In some embodiments, CSI may be full channel information or a feature vector of full channel information in a space-frequency domain, may be coefficient information in an angle-delay domains, may be full channel information or a feature vector of full channel information in a time-space-frequency domains, or may be a precoding matrix indicator (PMI) calculated based on a Type II codebook.

Therefore, the terminal may receive the downlink RS(s) sent by the network device at the second prediction time instant(s), and determine reference CSI used as the reference for AI model performance monitoring based on the downlink RS(s), to effectively improve the accuracy and convenience of AI model performance monitoring and improve the effectiveness of AI model performance monitoring.

At step S3103, the terminal determines prediction CSI, where the prediction CSI is predicted by the AI model and corresponds to first prediction time instant(s).

In some embodiments, the reference CSI and the prediction CSI are used together in determining performance information of the AI model. The first prediction time instant(s) may be identical to or differ from the second prediction time instant(s).

In some embodiments, the AI model is used to predict the CSI for one or more prediction time instants (where these prediction time instants are also called first prediction time instants). The first prediction time instant(s) may be identical to the second prediction time instant(s), or the first prediction time instant(s) may differ from the second prediction time instant(s).

In some embodiments, the CSI predicted based on an AI model is called the prediction CSI.

In some embodiments, the accuracy of the prediction CSI outputted by the AI model is evaluated based on the reference CSI to determine the performance of the AI model.

In some embodiments, the reference CSI and the prediction CSI are used together in determining the performance information of the AI model.

In some embodiments, the performance information represents the performance of the AI model.

In some embodiments, monitored value(s) of the performance of the AI model is determined based on the reference CSI and the prediction CSI, and the performance information of the AI model is determined based on the monitored value(s).

At step S3104, the terminal determines the monitored value(s) representing the performance of the AI model based on the reference CSI and the prediction CSI.

In some embodiments, a monitored value may be, for example, a key performance indicator (KPI).

In some embodiments, a monitored value may be, for example, a KPI between the reference CSI and the prediction CSI.

In some embodiments, a monitored value may be, for example, a KPI between a precoding matrix indicator (PMI) corresponding to the reference CSI and a PMI corresponding to the prediction CSI.

In some embodiments, in a case where the reference CSI is estimated based on a downlink RS, a first KPI between the reference CSI and the prediction CSI is calculated and taken as the monitored value.

In some embodiments, the first KPI refers to the KPI between the reference CSI that is estimated based on the downlink RS and the prediction CSI that is predicted based on the AI model.

In some embodiments, the first KPI between the reference CSI that is estimated based on the downlink RS and the prediction CSI may be calculated and taken as the monitored value.

In some embodiments, a KPI is calculated based on the reference CSI that is determined based on the received downlink RS and the prediction CSI that is predicted based on the AI model.

In some embodiments, in a case where the reference CSI is estimated based on the downlink RS, a feature vector may be calculated based on the reference CSI, and a fourth KPI between the feature vector and a second PMI may be calculated and taken as a monitored value.

In some embodiments, the fourth KPI may refer to a KPI between the feature vector that is calculated based on the CSI and the second PMI corresponding to the prediction CSI.

In some embodiments, a KPI is calculated based on the feature vector and a PMI, the feature vector is calculated based on the reference CSI, the reference CSI is determined based on the received downlink RS, the PMI is determined based on the prediction CSI, and the prediction CSI is predicted by the AI model.

In some embodiments, the above various KPIs may each be, for example, intermediate KPIs, such as square generalized cosine similarity (SGCS) or normalized mean square error (NMSE).

In some embodiments, the terminal may calculate a final KPI based on the above various intermediate KPIs.

In some embodiments, the final KPI may include at least one of a system throughput, a network block error rate (BLER), an acknowledgement (ACK), or a negative ACK (NACK).

Therefore, the monitored value representing the performance of the AI model is obtained through accurate analysis by jointly considering the reference CSI and the prediction CSI. When the performance information of the AI model is determined based on the monitored value, the accuracy and effectiveness of AI model performance monitoring may be effectively improved.

At step S3105, the terminal sends first indication information, where the first indication information includes the monitored value(s) and/or information associated with the monitored value(s).

In some embodiments, the information associated with a monitored value may be, for example, information of a comparison result between the monitored value and a threshold, or any other possible information associated with the monitored value.

In some embodiments, the information associated with a monitored value, such as the final KPI calculated based on the intermediate KPIs, may be the performance information of the AI model determined based on the monitored value.

In some embodiments, the terminal may send the monitored value(s) and/or the information associated with the monitored value(s) to the network device.

In some embodiments, the terminal may carry the monitored value(s) and/or the information associated with the monitored value(s) in the first indication information, and send the first indication information to the network device, to inform the network device of the monitored value(s) and/or the information associated with the monitored value(s).

In some embodiments, there are a plurality of reference CSI, there are a plurality of prediction CSI, different reference CSI correspond to different first prediction time instants or second prediction time instants, and different prediction CSI correspond to different first prediction time instants. Correspondingly, there are a plurality of first KPIs and/or a plurality of second KPIs and/or a plurality of third KPIs, and there are a plurality of fourth KPIs. Therefore, the method may be effectively applied to personalized AI model performance monitoring scenarios, to effectively improve the accuracy of AI model performance monitoring.

Therefore, the terminal may send the first indication information to the network device. The first indication information includes the monitored value(s) and/or the information associated with the monitored value(s). The network device may analyze the performance of the AI model based on the monitored value(s) and/or the information associated with the monitored value(s), to effectively reduce computing costs of the terminal side for AI model performance monitoring.

In some embodiments, one first indication information is sent. The one first indication information includes the preset number of monitored values and/or information associated with each monitored value.

In some embodiments, the preset number is represented by K, which is a positive integer greater than or equal to 1.

In some embodiments, the preset number is less than or equal to the total number of second prediction time instants (which is represented by L).

In some embodiments, the terminal may send K KPIs at a time, and the KPI is any one of the above various KPIs.

In some embodiments, one first indication information may be sent. The one first indication information carries K KPIs, or the first indication information carries information associated with each of the K KPIs, such as a comparison result between each KPI and a corresponding threshold.

In some embodiments, the preset number of pieces of first indication information are sent respectively. Each first indication information includes a monitored value and/or information associated with the monitored value.

In some embodiments, the terminal may report K KPIs through multiple transmissions, and the KPI is any one of the above various KPIs.

In some embodiments, multiple pieces of first indication information may be sent. Each information carries a respective KPI, or carries information associated with a respective KPI, such as a comparison result between the KPI and a corresponding threshold.

Therefore, the monitored value(s) and/or the information associated with the monitored value(s) representing the performance of the AI model may be sent flexibly, which is effectively suitable for personalized communication scenarios.

In some embodiments, the terminal may receive second indication information (including the preset number) sent by the network device, and determine the preset number indicated by the second indication information.

In some embodiments, the terminal may determine the preset number based on a protocol.

In some embodiments, the terminal may report the preset number to the network device.

Therefore, the number of monitored values to be sent may be determined accurately, and the number may be flexibly configured, which is effectively applicable to personalized communication scenarios.

In some embodiments, the information associated with a monitored value includes a comparison result between the monitored value and its corresponding monitoring threshold. In addition to the monitored value, the terminal may also send the comparison result between the monitored value and its corresponding monitoring threshold to the network device, which not only reduces a feedback overhead of the terminal, but also enables the network device to be fully informed of the performance of the AI model, and the network device may accurately and flexibly determine the performance information of the AI model.

In some embodiments, the terminal may receive the second indication information sent by the network device and determine the monitoring threshold(s) included in the second indication information.

In some embodiments, the terminal determines the monitoring threshold(s) based on a protocol.

In some embodiments, the terminal reports the monitoring threshold(s) to the network device.

Therefore, a monitoring threshold corresponding to a monitored value may be accurately determined, and the monitoring threshold corresponding to the monitored value may be flexibly configured, which is effectively applicable to personalized communication scenarios.

At step S3106, the network device determines the performance information based on the monitored value(s) and/or the information associated with the monitored value(s).

In some embodiments, the network device receives the monitored value(s) and/or the information associated with the monitored value(s) representing the performance of the AI model sent by the terminal.

In some embodiments, the network device receives one first indication information (i.e., one piece of first indication information). The one first indication information includes the preset number of monitored values and/or information associated with each monitored value.

In some embodiments, the network device receives K KPIs sent by the terminal at a time (e.g. through one transmission), and the KPI is any one of the above various KPIs.

In some embodiments, the network device receives the preset number of pieces of first indication information (e.g., K pieces of first indication information) separately. Each first indication information includes a monitored value and/or information associated with the monitored value.

In some embodiments, the network device receives K KPIs reported by the terminal through multiple transmissions, and the KPI is any one of the above various KPIs.

In some embodiments, the network device may send the second indication information and indicate the preset number based on the second indication information.

In some embodiments, the network device determines the preset number based on a protocol.

In some embodiments, the network device receives the preset number reported by the terminal.

In some embodiments, the information associated with a monitored value includes a comparison result between the monitored value and its corresponding monitoring threshold.

In some embodiments, the network device may send the second indication information and indicate the monitoring threshold to the terminal based on the second indication information.

In some embodiments, the network device determines the monitoring threshold based on a protocol.

In some embodiments, the network device receives the monitoring threshold reported by the terminal.

In some embodiments, the network device may determine the performance information of the AI model based on the monitored value(s) and/or the information associated with the monitored value(s) reported by the terminal.

In some embodiments, the network device may calculate a final KPI based on various intermediate KPIs reported by the terminal.

In some embodiments, the final KPI may include at least one of a system throughput, a network BLER, an ACK, or a NACK.

The method for monitoring the performance of the AI model according to embodiments of the disclosure includes at least one of steps S3101-S3106. For example, step S3101 may be implemented as an independent embodiment, step S3102 may be implemented as an independent embodiment, and so on, which is not limited herein. Steps S3101 and S3102 may be implemented as an independent embodiment, and steps S3101, S3102, and S3103 may be implemented as an independent embodiment, which is not limited herein.

In an implementation or embodiment, without contradiction, the steps may be executed independently, arbitrarily combined or executed in different orders. Moreover, optional implementations or examples may be combined arbitrarily, or may be arbitrarily combined with steps of other implementations or embodiments.

In embodiments, the terminal may receive the downlink RS(s) sent by the network device at the second prediction time instant(s), determines the reference CSI used for AI model performance monitoring based on the downlink RS(s), and determines prediction CSI corresponding to the first prediction time instant(s) predicted by the AI model. The reference CSI and the prediction CSI are used together in determining the performance information of the AI model. The first prediction time instant(s) may be identical to or differ from the second prediction time instant(s). The monitored value(s) representing the performance of the AI model is determined based on the reference CSI and the prediction CSI. The terminal sends the first indication information to the network device. The first indication information includes the monitored value(s) and/or the information associated with the monitored value(s). The network device determines the performance information based on the monitored value(s) and/or the information associated with the monitored value(s), and the network device analyzes the performance of the AI model based on the monitored value(s) and/or the information associated with the monitored value(s), which effectively reduces the computing cost of the terminal for AI model performance monitoring, effectively improves the accuracy and convenience of AI model performance monitoring, and improves the effectiveness of AI model performance monitoring.

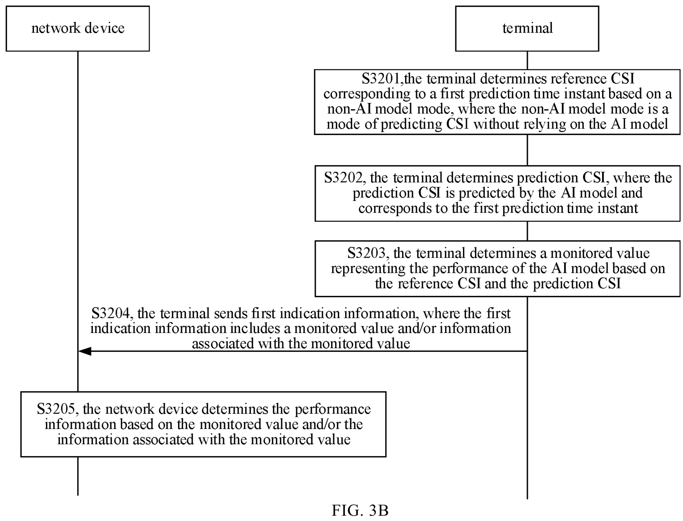

FIG. 3B is an interactive schematic diagram illustrating a method for monitoring performance of an AI model according to an embodiment of the disclosure. As illustrated in 3B, embodiments of the disclosure relate to a method for monitoring performance of an AI model. The method is performed by a communication system 100 and includes the following.

At step S3201, the terminal determines reference CSI corresponding to first prediction time instant(s) based on a non-AI model mode, where the non-AI model mode is a mode of predicting CSI without relying on the AI model.

In some embodiments, the reference CSI is used as a reference for AI model performance monitoring.

In some embodiments, the reference CSI may be CSI corresponding to one or more first prediction time instant(s) predicted based on the non-AI model mode.

In some embodiments, the non-AI model mode is a mode of predicting CSI without relying on the AI model.

In some embodiments, the non-AI model mode is, for example, an autoregressive model (AR) algorithm.

At step S3202, the terminal determines prediction CSI, where the prediction CSI is predicted by the AI model and corresponds to the first prediction time instant(s).

In some embodiments, the reference CSI and the prediction CSI are used together to determine the performance information of the AI model.

At step S3203, the terminal determines monitored value(s) representing the performance of the AI model based on the reference CSI and the prediction CSI.

In some embodiments, in a case where the reference CSI is predicted based on the non-AI model mode, a second KPI between the reference CSI and the prediction CSI is calculated and taken as a monitored value.

In some embodiments, the second KPI may refer to a KPI between the reference CSI that is predicted based on the non-AI model mode and the prediction CSI that is predicted based on the AI model.

In some embodiments, in a case where the reference CSI is predicted based on the non-AI model mode, a first PMI corresponding to the reference CSI may be determined, a second PMI corresponding to the prediction CSI may be determined, and a third KPI between the first PMI and the second PMI may be calculated and taken as a monitored value.

In some embodiments, the third KPI may refer to the KPI between the PMI corresponding to the reference CSI and the PMI corresponding to the prediction CSI.

In some embodiments, another KPI may be determined based on the PMI corresponding to the reference CSI that is calculated in the non-AI model mode and the PMI corresponding to the prediction CSI that is calculated by the AI model.

In some embodiments, any of the above various KPIs may be used as the monitored value representing the performance of the AI model.

In some embodiments of the disclosure, the performance information of the AI model may be analyzed by jointly considering the reference CSI that is determined based on the downlink RS and the reference CSI that is predicted based on the non-AI model mode, which improves the flexibility and effectiveness of determining the performance information of the AI model and improves the reliability of analyzing the performance information of the AI model.

In some embodiments of the disclosure, in a case where the performance information of the AI model is analyzed by jointly considering the reference CSI that is determined based on the downlink RS and the reference CSI that is predicted based on the non-AI model mode, a part of the reference CSI (e.g., some reference CSI) is estimated based on the downlink RS(s) sent by the network device at one or more second prediction time instants, the remaining part of the reference CSI (e.g., the remaining reference CSI) is predicted based on the non-AI model mode, and the performance information of the AI model may be analyzed based on the reference CSI obtained in the above two ways.

In some embodiments, the one or more second prediction time instants may be determined based on following methods.

In some embodiments, the second prediction time instant(s) is/are within a prediction window.

In some embodiments, in a case where there is one second prediction time instant, the second prediction time instant is a first one of time instants within the prediction window, a $\left\lceil \frac{w_d}{2} \right\rceil$ th time instant within the prediction window, a $\left\lfloor \frac{w_d}{2} \right\rfloor$ th time instant within the prediction window, or a last one of time instants within the prediction window, where $w_d$ represents a duration of the prediction window, $\lceil \ \rceil$ means rounding up, and $\lfloor \ \rfloor$ means rounding down.

In some embodiments, in a case where there are two second prediction time instants, the second prediction time instants include a first one of time instants within the prediction window and a $\left\lceil \frac{w_d}{2} \right\rceil$ th time instant within the prediction window, a first one of time instants within the prediction window and a $\left\lfloor \frac{w_d}{2} \right\rfloor$ th time instant within the prediction window, a $\left\lceil \frac{w_d}{2} \right\rceil$ th time instant within the prediction window and a last one of time instants within the prediction window, a $\left\lfloor \frac{w_d}{2} \right\rfloor$ th time instant within the prediction window and a last one of time instants within the prediction window, or a first one of time instants within the prediction window and a last one of time instants within the prediction window, where $w_d$ represents a duration of the prediction window, $\lceil \ \rceil$ means rounding up, and $\lfloor \ \rfloor$ means rounding down.

In some embodiments, in a case where there are more than two second prediction time instants, the second prediction time instants include a ( $\left\lceil \frac{w_d}{L} \right\rceil (l-1) + 1$ )th time instant within the prediction window or a ( $\left\lfloor \frac{w_d}{2} \right\rfloor (l-1) + 1$ )th time instant within the prediction window, where $l$ = 1, ..., L, L represents the number of second prediction time instants, $w_d$ represents a duration of the prediction window, $\lceil \ \rceil$ means rounding up, and $\lfloor \ \rfloor$ means rounding down.

At step S3204, the terminal sends first indication information. The first indication information includes monitored value(s) and/or information associated with the monitored value(s).

At step S3205, the network device determines the performance information based on the monitored value(s) and/or the information associated with the monitored value(s).

The method for monitoring the performance of the AI model according to embodiments of the disclosure includes at least one of steps S3201-S3205. For example, step S3201 may be implemented as an independent embodiment, step S3202 may be implemented as an independent embodiment, and so on, which is not limited herein. Steps S3201 and S3202 may be implemented as an independent embodiment, and steps S3201, S3202, and S3203 may be implemented as an independent embodiment, which is not limited herein.

In an implementation or embodiment, without contradiction, the steps may be executed independently, arbitrarily combined or executed in different orders. Moreover, optional implementations or examples may be combined arbitrarily, or may be arbitrarily combined with steps of other implementations or embodiments.

In embodiments, the terminal firstly determines the reference CSI corresponding to a first prediction time instant based on the non-AI model mode, which is a mode of predicting CSI without relying on the AI model. The reference CSI is used as a reference for monitoring the performance of the AI model. The terminal then determines the prediction CSI, which is predicted by the AI model and corresponds to the first prediction time instant. The reference CSI and the prediction CSI are used together in determining the performance information of the AI model. Based on the reference CSI and the prediction CSI, a monitored value representing the performance of the AI model is determined. The terminal sends the first indication information to the network device. The first indication information includes the monitored value and/or the information associated with the monitored value. The network device determines the performance information based on the monitored value and/or the information associated with the monitored value, to effectively improve the flexibility, accuracy and convenience of AI model performance monitoring and improve the effectiveness of AI model performance monitoring.

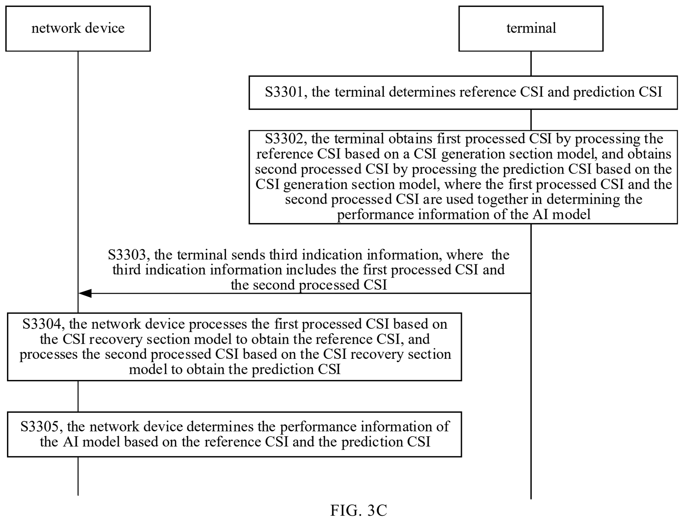

FIG. 3C is an interactive schematic diagram illustrating a method for monitoring performance of an AI model according to an embodiment of the disclosure. As illustrated in 3C, embodiments of the disclosure relate to a method for monitoring performance of an AI model. The method is performed by the communication system 100 and includes the following.

At step S3301, the terminal determines reference CSI and prediction CSI.

In some embodiments, the reference CSI is used as a reference for AI model performance monitoring. The prediction CSI is predicted by the AI model and corresponds to a first prediction time instant, and the reference CSI and the prediction CSI are used together in determining performance information of the AI model.

At step S3302, the terminal obtains first processed CSI by processing the reference CSI based on a CSI generation section model, and obtains second processed CSI by processing the prediction CSI based on the CSI

**EP 4 742 612 A1**

generation section model. The first processed CSI and the second processed CSI are used together in determining the performance information of the AI model.

In some embodiments, the terminal sends a CSI feedback to the network device through a CSI feedback model. That is, the terminal compresses the CSI through the CSI generation section model, quantizes the compressed CSI into a binary bit stream, and sends the binary bit stream to the network device. The network device recovers the CSI through a CSI recovery section model.

In some embodiments, the terminal inputs the reference CSI into the CSI generation section model and obtains compressed CSI outputted by the CSI generation section model. The compressed CSI is called the first processed CSI.

In some embodiments, the terminal inputs the prediction CSI into the CSI generation section model and obtains compressed CSI outputted by the CSI generation section model. The compressed CSI is called the second processed CSI.

In some embodiments, the performance information of the AI model is determined based on the first processed CSI and the second processed CSI.

In some embodiments, there may be a plurality of reference CSI, and different reference CSI correspond to different first prediction time instants or second prediction time instants.

In some embodiments, the terminal may process a plurality of reference CSI based on the CSI generation section model respectively to obtain a plurality of first processed CSI.

In some embodiments, one reference CSI is used as an input of the CSI generation section model. The CSI generation section model compresses the one reference CSI and obtains the first processed CSI corresponding to the one reference CSI. Other reference CSI is processed in the same way to obtain the plurality of first processed CSI.

In some embodiments, a plurality of reference CSI are inputted into the CSI generation section model and jointly processed by the CSI generation section model to obtain one first processed CSI.

Therefore, the reference CSI may be compressed flexibly and effectively to improve the timeliness of reporting the first processed CSI obtained after the compression processing, so that the network device may quickly monitor the performance information of the AI model.

In some embodiments, there are a plurality of prediction CSI, and different prediction CSI correspond to different first prediction time instants.

In some embodiments, the terminal processes a plurality of prediction CSI based on the CSI generation section model, respectively, to obtain a plurality of second processed CSI.

In some embodiments, one prediction CSI is used as an input of the CSI generation section model. The CSI generation section model compresses the one prediction CSI to obtain the second processed CSI corresponding to the one prediction CSI. Other prediction CSI may be processed in the same way to obtain the plurality of second processed CSI.

In some embodiments, a plurality of prediction CSI may be inputted into the CSI generation section model at the same time and jointly processed by the CSI generation section model to obtain one second processed CSI.

Therefore, the prediction CSI is compressed flexibly and effectively to improve the timeliness of reporting the second processed CSI obtained after the compression processing, so that the network device may quickly monitor the performance information of the AI model.

At step S3303, the terminal sends third indication information. The third indication information includes the first processed CSI and the second processed CSI.

In some embodiments, indication information for indicating the first processed CSI and the second processed CSI is referred to as the third indication information.

In some embodiments, the terminal reports the third indication information to the network device.

In some embodiments, the terminal sends the third indication information to the network device.

In some embodiments, the third indication information is used to indicate the first processed CSI and the second processed CSI.

Therefore, the terminal may process the reference CSI based on the CSI generation section model to obtain the first processed CSI, and process the prediction CSI based on the CSI generation section model to obtain the second processed CSI. The first processed CSI and the second processed CSI are used together to determine the performance information of the AI model. The terminal sends the third indication information to the network device, where the third indication information includes the first processed CSI and the second processed CSI, which enables the network device to analyze the performance of the AI model based on the first processed CSI and the second processed CSI, to effectively reduce the computing cost of the terminal for AI model performance monitoring. Since the reference CSI and the prediction CSI are compressed and the compressed reference CSI and the compressed prediction CSI are sent, the timeliness of reporting the first processed CSI and the second processed CSI obtained after the compression processing may be effectively improved. Therefore, the network device may quickly monitor the performance information of the AI model.

At step S3304, the network device processes the first processed CSI based on the CSI recovery section model to obtain the reference CSI, and processes the second processed CSI based on the CSI recovery section model to obtain the

12

prediction CSI.

In some embodiments, the network device performs recovery processing through the CSI recovery section model to obtain the CSI.

In some embodiments, the first processed CSI is used as an input of the CSI recovery section model. The network device performs the recovery processing based on the CSI recovery section model to obtain the reference CSI outputted by the CSI recovery section model.

In some embodiments, the second processed CSI is used as an input of the CSI recovery section model. The network device performs the recovery processing based on the CSI recovery section model to obtain the prediction CSI outputted by the CSI recovery section model.

In some embodiments, there are one or more first processed CSI.

In some embodiments, one first processed CSI is processed based on the CSI recovery section model to obtain a plurality of reference CSI.

In some embodiments, a joint recovery processing is performed based on the CSI recovery section model. For example, a plurality of reference CSI is recovered based on one first processed CSI that is obtained through a joint compression processing.

In some embodiments, a plurality of first processed CSI are processed respectively based on the CSI recovery section model to obtain a plurality of reference CSI.

In some embodiments, one first processed CSI is used as an input of the CSI recovery section model, and one reference CSI is obtained after performing the CSI recovery processing on the one first processed CSI by the CSI recovery section model. Other first processed CSI is processed in the same way to obtain a plurality of reference CSI.

In some embodiments, there are one or more second processed CSI.

In some embodiments, one second processed CSI is processed based on the CSI recovery section model to obtain a plurality of prediction CSI.

In some embodiments, a joint recovery processing is performed based on the CSI recovery section model. For example, a plurality of prediction CSI is recovered based on one second processed CSI that is obtained through a joint compression processing.

In some embodiments, a plurality of second processed CSIs are processed respectively based on the CSI recovery section model to obtain a plurality of prediction CSIs.

In some embodiments, one second processed CSI is used as an input of the CSI recovery section model, and the CSI recovery section model performs the recovery processing on the one second processed CSI to obtain one prediction CSI. Other second processed CSI is processed in the same way to obtain a plurality of prediction CSI.

In some embodiments, the network device obtains the preset number of reference CSI or prediction CSI through the recovery processing, such as K reference CSI or K prediction CSI.

At step S3305, the network device determines the performance information of the AI model based on the reference CSI and the prediction CSI.

In some embodiments, the performance information of the AI model is determined based on the reference CSI and the prediction CSI.

In some embodiments, the reference CSI and the prediction CSI are processed based on the same or corresponding methods performed by the terminal to determine the performance information of the AI model.

In some embodiments, an intermediate KPI is calculated based on the reference CSI and the prediction CSI, and the performance information of the AI model is analyzed based on the intermediate KPI.

In some embodiments, intermediate KPIs are calculated based on the reference CSI and the prediction CSI and a final KPI is determined, to analyze the performance information of the AI model.

The method for monitoring the performance of the AI model according to embodiments of the disclosure includes at least one of steps S3301-S3305. For example, step S3301 may be implemented as an independent embodiment, step S3302 may be implemented as an independent embodiment, and so on, which is not limited herein. Steps S3301 and S3302 may be implemented as an independent embodiment, and steps S3301, S3302, and S3303 may be implemented as an independent embodiment, which is not limited herein.

In an implementation or embodiment, without contradiction, the steps may be executed independently, arbitrarily combined or executed in different orders. Moreover, optional implementations or examples may be combined arbitrarily, or may be arbitrarily combined with steps of other implementations or embodiments.

In an embodiment, the terminal processes the reference CSI based on the CSI generation section model to obtain the first processed CSI, and processes the prediction CSI based on the CSI generation section model to obtain the second processed CSI. The first processed CSI and the second processed CSI are used together in determining the performance information of the AI model. The terminal sends the third indication information to the network device. The third indication information includes the first processed CSI and the second processed CSI. The network device is enabled to analyze the performance of the AI model based on the first processed CSI and the second processed CSI, to effectively reduce the computing cost of the terminal for AI model performance monitoring. Since the reference CSI and the prediction CSI are compressed and then sent, the timeliness of reporting the first processed CSI and the second processed CSI obtained after the compression processing may be effectively improved. Therefore, the network device determines the performance information of the AI model based on the recovered reference CSI and prediction CSI, to accurately analyze the performance information of the AI model.

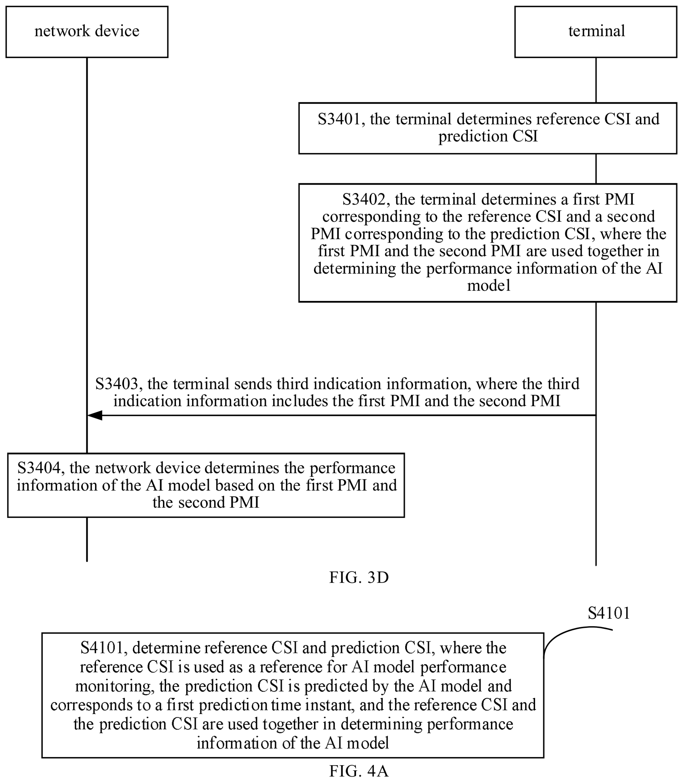

FIG. 3D is an interactive schematic diagram illustrating a method for monitoring performance of an AI model according to an embodiment of the disclosure. As illustrated in 3D, embodiments of the disclosure relate to a method for monitoring performance of an AI model. The method is performed by the communication system 100, and includes the following.

At step S3401, the terminal determines reference CSI and prediction CSI.

In some embodiments, the reference CSI is used as a reference for AI model performance monitoring. The prediction CSI is predicted by the AI model and corresponds to first prediction time instant(s). The reference CSI and the prediction CSI are used together for determining performance information of the AI model.

At step S3402, the terminal determines first PMI(s) corresponding to the reference CSI and second PMI(s) corresponding to the prediction CSI. The first PMI(s) and the second PMI(s) are used together in determining the performance information of the AI model.

In some embodiments, indication information for indicating the first PMI(s) and the second PMI(s) may be referred to as the third indication information.

In some embodiments, the terminal reports the third indication information to the network device.

In some embodiments, the terminal sends the third indication information to the network device.

In some embodiments, the third indication information is used to indicate the first PMI(s) and the second PMI(s).

At step S3403, the terminal sends the third indication information, where the third indication information includes the first PMI(s) and the second PMI(s).

At step S3404, the network device determines the performance information of the AI model based on the first PMI(s) and the second PMI(s).

In some embodiments, the network device compares the first PMI(s) and corresponding second PMI(s) to determine the performance information of the AI model.

The method for monitoring the performance of the AI model according to embodiments of the disclosure includes at least one of steps S3401-S3404. For example, step S3401 may be implemented as an independent embodiment, step S3402 may be implemented as an independent embodiment, and so on, which is not limited herein. Steps S3401 and S3402 may be implemented as an independent embodiment, and steps S3401, S3402, and S3403 may be implemented as an independent embodiment, which is not limited herein.

In an implementation or embodiment, without contradiction, the steps may be executed independently, arbitrarily combined or executed in different orders. Moreover, optional implementations or examples may be combined arbitrarily, or may be arbitrarily combined with steps of other implementations or embodiments.

In an embodiment, the terminal may determine the first PMI(s) corresponding to the reference CSI and the second PMI(s) corresponding to the prediction CSI. The first PMI(s) and the second PMI(s) are used together to determine the performance information of the AI model. The terminal may send the third indication information. The third indication information includes the first PMI(s) and the second PMI(s), which enables the network device to determine the performance information of the AI model based on the first PMI(s) and the second PMI(s), to effectively reduce the computing cost of the terminal for AI model performance monitoring. Since the PMIs corresponding to the reference CSI and the prediction CSI are determined respectively, and the respective PMIs corresponding to the reference CSI and the prediction CSI are indicated to the network device, the network device may determine the performance information of the AI model based on the respective PMIs corresponding to the reference CSI and the prediction CSI, to accurately and quickly analyze the performance information of the AI model.

FIG. 4A is an interactive schematic diagram illustrating a method for monitoring performance of an AI model according to an embodiment of the disclosure. As illustrated in 4A, embodiments of the disclosure relate to a method for monitoring performance of an AI model. The method is performed by the terminal, and includes the following.

At step S4101, reference CSI and prediction CSI are determined. The reference CSI is used as a reference for AI model performance monitoring, the prediction CSI is predicted by the AI model and corresponds to first prediction time instant(s), and the reference CSI and the prediction CSI are used together in determining performance information of the AI model.

For detailed description of step S4101, reference may be made to the above embodiments of FIG. 3.

In an embodiment, the terminal determines the reference CSI and the prediction CSI. The reference CSI is used as the reference for AI model performance monitoring, the prediction CSI is predicted by the AI model and corresponds to the first prediction time instant(s), and the reference CSI and the prediction CSI are used together in determining the performance information of the AI model. Therefore, the performance of the AI model used for CSI prediction may be effectively monitored.

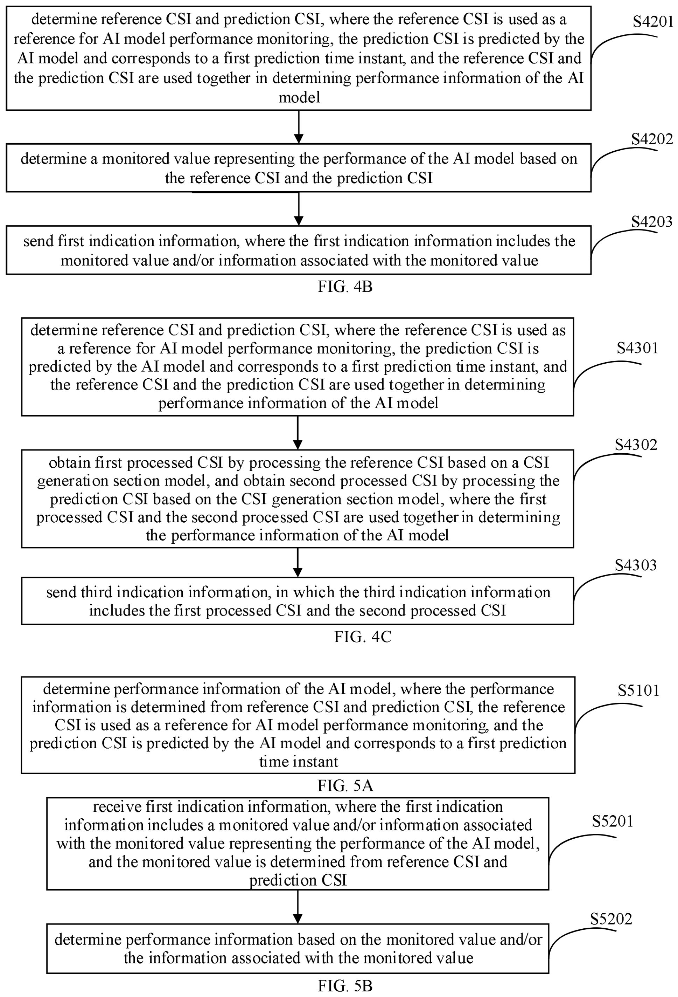

FIG. 4B is an interactive schematic diagram illustrating a method for monitoring performance of an AI model according to an embodiment of the disclosure. As illustrated in 4B, embodiments of the disclosure relate to a method for monitoring performance of an AI model. The method is performed by the terminal, and includes the following.

At step S4201, reference CSI and prediction CSI are determined. The reference CSI is used as a reference for AI model performance monitoring, the prediction CSI is predicted by the AI model and corresponds to first prediction time instant(s), and the reference CSI and the prediction CSI are used together in determining performance information of the AI model.

At step S4202, monitored value(s) representing the performance of the AI model is determined based on the reference CSI and the prediction CSI.

At step S4203, first indication information is sent. The first indication information includes the monitored value(s) and/or information associated with the monitored value(s).

For detailed descriptions of steps S4201-S4203, reference may be made to the above embodiments of FIG. 3.

The method for monitoring the performance of the AI model according to embodiments of the disclosure includes at least one of steps S4201-S4203. For example, step S4201 may be implemented as an independent embodiment, step S4202 may be implemented as an independent embodiment, and so on, which is not limited herein. Steps S4201 and S4202 may be implemented as an independent embodiment, and steps S4201, S4202, and S4203 may be implemented as an independent embodiment, which is not limited herein.

In an embodiment, the terminal may determine the reference CSI and the prediction CSI. The reference CSI is used as the reference for AI model performance monitoring, the prediction CSI is predicted by the AI model and corresponds to the first prediction time instant(s), and the reference CSI and the prediction CSI are used together in determining the performance information of the AI model. Therefore, the performance of the AI model used for CSI prediction may be effectively monitored. The monitored value representing the performance of the AI model is determined based on the reference CSI and the prediction CSI. The terminal may send the first indication information to the network device. The first indication information includes the monitored value(s) and/or the information associated with the monitored value(s). The network device may estimate the performance information of the AI model using the monitored value(s) and/or the information associated with the monitored value(s), to effectively reduce the computing cost of the terminal for AI model performance monitoring.

FIG. 4C is an interactive schematic diagram illustrating a method for monitoring performance of an AI model according to an embodiment of the disclosure. As illustrated in 4C, embodiments of the disclosure relate to a method for monitoring performance of an AI model. The method is performed by the terminal, and includes the following.

At step S4301, reference CSI and prediction CSI are determined. The reference CSI is used as a reference for AI model performance monitoring, the prediction CSI is predicted by the AI model and corresponds to first prediction time instant(s), and the reference CSI and the prediction CSI are used together for determining performance information of the AI model.

At step S4302, first processed CSI is obtained by processing the reference CSI based on a CSI generation section model, and second processed CSI is obtained by processing the prediction CSI based on the CSI generation section model. The first processed CSI and the second processed CSI are used together in determining the performance information of the AI model.

At step S4303, third indication information is sent. The third indication information includes the first processed CSI and the second processed CSI.

For detailed descriptions of steps S4301-S4303, reference may be made to the above embodiments of FIG. 3.

The method for monitoring the performance of the AI model according to embodiments of the disclosure includes at least one of steps S4301-S4303. For example, step S4301 may be implemented as an independent embodiment, step S4302 may be implemented as an independent embodiment, and so on, which is not limited herein. Steps S4301 and S4302 may be implemented as an independent embodiment, and steps S4301, S4302, and S4303 may be implemented as an independent embodiment, which is not limited herein.

In an embodiment, the terminal may determine the reference CSI and the prediction CSI. The reference CSI is used as the reference for AI model performance monitoring, the prediction CSI is predicted by the AI model and corresponds to the first prediction time instant(s), and the reference CSI and the prediction CSI are used together for determining the performance information of the AI model. Therefore, the performance of the AI model used for CSI prediction may be effectively monitored. The reference CSI may processed based on the CSI generation section model to obtain the first processed CSI, and the prediction CSI may processed based on the CSI generation section model to obtain the second processed CSI. The first processed CSI and the second processed CSI are used together in determining the performance information of the AI model. The terminal may send the third indication information to the network device. The third indication information includes the first processed CSI and the second processed CSI. The network device may estimate the performance information of the AI model by using the first processed CSI and the second processed CSI, which enables the network device to analyze the performance of the AI model based on the first processed CSI and the second processed CSI, thereby effectively reducing the computing cost of the terminal for AI model performance monitoring. Since the reference CSI and the prediction CSI are compressed and then sent, the timeliness of reporting the first processed CSI and the second processed CSI obtained after the compression processing may be effectively improved.

FIG. 5A is an interactive schematic diagram illustrating a method for monitoring performance of an AI model according to an embodiment of the disclosure. As illustrated in 5A, embodiments of the disclosure relate to a method for monitoring performance of an AI model. The method is performed by the network device, and includes the following.

At step S5101, performance information of the AI model is determined, where the performance information is determined by reference CSI and prediction CSI, the reference CSI is used as a reference for AI model performance monitoring, and the prediction CSI is predicted by the AI model and corresponds to first prediction time instant(s).

For detailed description of step S5101, reference may be made to the above embodiments of FIG. 3.

In an embodiment, the network device may determine the performance information of the AI model. The performance information is determined based on the reference CSI and the prediction CSI, the reference CSI is used as the reference for AI model performance monitoring, and the prediction CSI is predicted by the AI model and corresponds to the first prediction time instant(s). Therefore, the performance of the AI model used for CSI prediction may be effectively monitored.

FIG. 5B is an interactive schematic diagram illustrating a method for monitoring performance of an AI model according to an embodiment of the disclosure. As illustrated in 5B, embodiments of the disclosure relate to a method for monitoring performance of an AI model. The method is performed by the network device, and includes the following.

At step S5201, first indication information is received, where the first indication information includes monitored value(s) representing the performance of the AI model and/or information associated with the monitored value(s), and the monitored value(s) is/are determined from reference CSI and prediction CSI.

In some embodiments, a monitored value includes at least one of: a first KPI between the reference CSI and the prediction CSI, where the reference CSI is estimated based on a downlink RS; a second KPI between the reference CSI and the prediction CSI, where the reference CSI is predicted based on a non-AI model mode; a third KPI between a first PMI corresponding to the reference CSI and a second PMI corresponding to the prediction CSI, where the reference CSI is predicted based on a non-AI model mode; or a fourth KPI between a feature vector calculated based on the reference CSI and a second PMI, where the reference CSI is estimated based on a downlink RS.

At step S5202, performance information is determined based on the monitored value(s) and/or the information associated with the monitored value(s).

For detailed descriptions of steps S5201-S5202, reference may be made to the above embodiments of FIG. 3.

The method for monitoring the performance of the AI model according to embodiments of the disclosure includes at least one of steps S5201-S5202. For example, step S5201 may be implemented as an independent embodiment, and step S5202 may be implemented as an independent embodiment, which is not limited herein. Moreover, steps S5201 and S5202 may be implemented as an independent embodiment, which is not limited herein.

In an embodiment, the network device may estimate the performance information of the AI model by using the monitored value(s) and/or the information associated with the monitored value(s), to effectively monitor the performance of the AI model used for CSI prediction, to reduce the computing cost of the terminal for AI model performance monitoring.

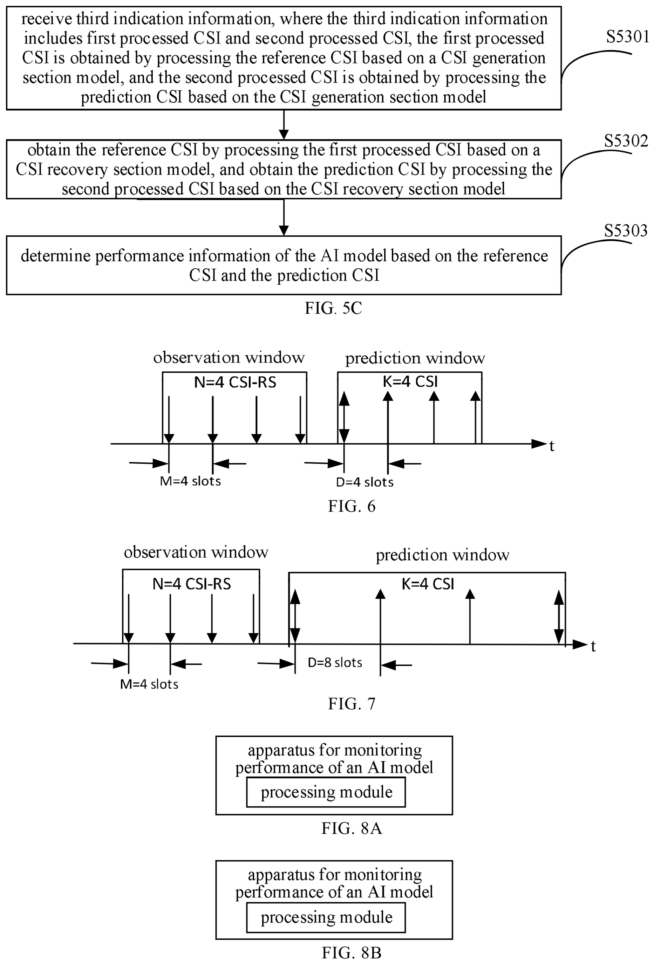

FIG. 5C is an interactive schematic diagram illustrating a method for monitoring performance of an AI model according to an embodiment of the disclosure. As illustrated in 5C, embodiments of the disclosure relate to a method for monitoring performance of an AI model. The method is performed by the network device, and includes the following.

At step S5301, third indication information is received, where the third indication information includes first processed CSI and second processed CSI, the first processed CSI is obtained by processing reference CSI based on a CSI generation section model, and the second processed CSI is obtained by processing prediction CSI based on the CSI generation section model.

At step S5302, the reference CSI is obtained by processing the first processed CSI based on a CSI recovery section model, and the prediction CSI is obtained by processing the second processed CSI based on the CSI recovery section model.

At step S5303, performance information of the AI model is determined based on the reference CSI and the prediction CSI.

For detailed descriptions of steps S5301-S5303, reference may be made to the above embodiments of FIG. 3.

The method for monitoring the performance of the AI model according to embodiments of the disclosure includes at least one of steps S5301-S5303. For example, step S5301 may be implemented as an independent embodiment, step S5302 may be implemented as an independent embodiment, and so on, which is not limited herein. Steps S5301 and S5302 may be implemented as an independent embodiment, and steps S5301, S5302, and S5303 may be implemented as an independent embodiment, which is not limited herein.

In an embodiment, the network device receives the first processed CSI and the second processed CSI that are obtained after the compression processing, which effectively improves the timeliness of receiving the first processed CSI and the second processed CSI that are obtained after the compression processing. The network device estimates the performance information of the AI model by using the first processed CSI and the second processed CSI, to effectively monitor the performance of the AI model for CSI prediction, to reduce the computing cost of the terminal for AI model performance monitoring.

Some options are provided below.

For example, an AI model used for CSI prediction in a time domain, a bilateral AI/machine learning (ML) model used for compressing CSI in a space-frequency domain or in an angle-delay domain, or a bilateral AI/ML model for compressing CSI in a time-space-frequency domain or in a Doppler-angle-delay domain may be deployed at the terminal side.

In some embodiments, the terminal may monitor the performance of the AI model used for CSI prediction in the time domain.

Option 1. A gNB sends downlink RS(s) at L≥1 time instants within a prediction window, and a UE obtains CSI at each time instant as $H_1$ based on the RS(s), and the UE compares $H_1$ with $H_{t_l}$ (which is the CSI at the $t_{l_{th}}$ time instant within the prediction window obtained through AI model inference at the terminal side, $l$ = 1, ..., L) or calculates a KPI (such as NMSE) between the two. Then, the terminal reports the calculated KPI to the network.

The L time instants at which the downlink RSs are sent within the prediction window are defined in the following.

Option1-1: L time instants at which the downlink RSs are sent are the same as T time instants within the prediction window.

Option1-2: L time instants at which the downlink RSs are sent within the prediction window are determined based on a length $w_d$ of the prediction window.

If L = 1, the one time instant is a first one of time instants within the prediction window, a $\left\lceil \dfrac{w_d}{2} \right\rceil$ th time instant within the prediction window, a $\left\lfloor \dfrac{w_d}{2} \right\rfloor$ th time instant within the prediction window, or a last one of time instants within the prediction window.

If L=2, the 2 time instants are a first one of time instants within the prediction window and a $\left\lceil \dfrac{w_d}{2} \right\rceil$ th time instant within the prediction window, a first one of time instants within the prediction window and a $\left\lfloor \dfrac{w_d}{2} \right\rfloor$ th time instant within the prediction window, a $\left\lceil \dfrac{w_d}{2} \right\rceil$ th time instant within the prediction window and a last one of time instants within the prediction window, a $\left\lfloor \dfrac{w_d}{2} \right\rfloor$ th time instant within the prediction window and a last one of time instants within the prediction window, or a first one of time instants within the prediction window and a last one of time instants within the prediction window.

If L>2, the L time instants are a ( $\left\lceil \dfrac{w_d}{L} \right\rceil (l-1) + 1$ )th time instant within the prediction window or a ( $\left\lfloor \dfrac{w_d}{2} \right\rfloor (l-1) + 1$ )th time instant within the prediction window, where $l$ = 1, ..., L.

The downlink RS(s) sent above may be RS resources that recur over M≥1 period(s), N≥1 reference aperiodic RS resource(s), or a combination of RS resource(s) that recur over M period(s) and the N aperiodic RS resource(s).

In some examples, the RS resource(s) may be CSI-RS resource(s) or DMRS resource(s).

Option 2. CSI is predicted for future time instants through a non-AI algorithm and through an AI algorithm, respectively.

The non-AI algorithm is used as a reference. The terminal calculates a KPI (such as NMSE) based on the CSI obtained by these two algorithms, and reports the calculated KPI to the network. Based on a comparison result, the performance of the current AI model is judged.

Option 3. The terminal predicts CSI through a non-AI algorithm and an AI-based method respectively, calculates corresponding PMIs through one of Type II codebook methods based on the predicted CSI, and calculates a KPI (such as SGCS) between the two PMIs, or calculates a KPI 1 corresponding to the non-AI algorithm and a KPI 2 corresponding to the AI-based method respectively, and then reports the calculated KPIs to the network.

Option 4. For the above Options 1-3, the terminal reports the calculated KPIs to the network side for judging the performance of the model.

The terminal may report the calculated K (e.g., K≥1) KPIs through one transmission or report separately the calculated K (e.g., K ≥ 1) KPIs through multiple transmissions.

Or the network side configures a KPI threshold for the terminal. The terminal reports a determination result of the performance of the AI model to the network based on the threshold. The network may configure I (such as I≥1) thresholds for the terminal, and I thresholds correspond to I different time instants.

In some examples, the terminal reports the calculated K measurement results to the network, or the network configures threshold(s) for the K measurement results for the terminal. If more than 70% of the comparison results in the K measurements show that the performance of the current model has not deteriorated, the terminal may continue to use this model. Otherwise, the terminal needs to update the model, switch to another model, or roll back to the existing non-AI algorithm used for CSI prediction.

In some embodiments, the above threshold(s) and the value of K may be pre-negotiated between the network and the terminal, or reported to the network by the terminal.

In some embodiments, the network side monitors the performance of the AI model of the terminal side used for AI-based time-domain CSI prediction based on the CSI reported by the terminal.

Option1: the network side judges the performance of AI model of the terminal side based on a KPI reported by the terminal.

Option2: the terminal compresses CSI of L time instants within the prediction window, that is predicted using a non-AI algorithm and an AI-based method respectively, by using a CSI generation section model in a bilateral AI/ML model used for compressing CSI in a space-frequency domain or in an angle-delay domain, and then reports the compressed CSI to the network side. The network side recovers the prediction CSI of K time instants by using a CSI recovery section model. In some examples, the terminal compresses the CSI of L time instants jointly through the CSI generation section model in the bilateral AI/ML model used for compressing CSI in a time-space-frequency domain or in a Doppler-angle-delay domain and reports the compressed CSI to the network side. The network side uses the CSI recovery section model to output all the prediction CSI of L time instants at a time.

For example, the terminal compresses the CSI that is estimated based on the downlink RSs received within the prediction window and then reports the compressed CSI to the network. The network compares, using the above implementations at the terminal side, the estimated CSI reported by the terminal and the prediction CSI that is obtained through the AI-based method.

Option3: the terminal predicts the CSI through the non-AI algorithm and an AI-based method respectively, and reports the CSI to the network side in the form of PMI. When K = 1, the terminal reports the PMI by means of Type II codebook. When K > 1, the terminal reports the PMI by means of Rel-18 Type II codebook. The network compares the received PMIs reported by the terminal in these two methods, and then judges the performance of the AI model at the terminal side.

In some embodiments, in Option 1, for example, the gNB configures CSI-RS resources of one period for the terminal, where the period M = 4 slots.

The CSI-RSs are sent at N = 4 time instants within the observation window. The UE predicts full channel information in the space-frequency domain at K = 4 future time instants within the prediction window, where an interval between adjacent predicted full channel information is D = 4 slots, and the length of the prediction window $w_d = K \cdot D = 16$ slots. The gNB sends an aperiodic CSI-RS to the UE at the first time instant within the prediction window, or the gNB sends a periodic CSI-RS at the fifth time instant within the prediction window, as indicated by arrows facing two directions in FIG. 6. FIG. 6 is a schematic diagram illustrating an application of the method for monitoring the performance of the AI model according to an embodiment of the disclosure.

Assuming that a channel bandwidth estimated from the CSI-RS contains 52 PRB. Based on the CSI-RSs sent at 4 time instants within the observation window, the UE estimates the full channel information $H_{i,j}$ corresponding to the $j^{th}$ PRB at the $i^{th}$ time instant, where I = 1, ..., 4, and j = 1, ..., 52. Then, the full channel information corresponding to the 4 time instants within the prediction window is obtained through the AI model inference at the terminal side and is denoted as $H_{i,j}$, where i = 5, ..., 8. $H_{5,j}$ represents the full channel information predicted at a first one of the time instant within the prediction window. The UE estimates the full channel information of different PRBs as $\hat{H}_{5,j}$ based on the CSI-RS sent by the gNB at the first one of the time instants within the prediction window, and then calculates NMSE by the following equation (1):

$$\text{NMSE} = 10 \cdot log_{10}\left(E\left\{\frac{\left\|\hat{H}_{5,j} - H_{5,j}\right\|_2^2}{\left\|\hat{H}_{5,j}\right\|_2^2}\right\}\right).\ (1)$$

The terminal may directly report the value of NMSE to the gNB.

Assuming that a threshold for the NMSE is configured by the gNB for the UE as -10dB, in a case where the calculated NMSE is greater than -10 dB, it indicates that the performance of the current AI model is getting worse, and the UE will report indication information for indicating that the performance of the AI model is poor, and the gNB may reconfigure parameters such as N and M, or instruct the UE to update the AI model or switch to a new AI model.

The gNB may send two aperiodic CSI-RSs to the UE at two different time instants within the prediction window (e.g., the first one and the last one of the time instants within the prediction window), respectively, as illustrated in FIG. 7. FIG. 7 is a schematic diagram illustrating an application of the method for monitoring the performance of the AI model according to an embodiment of the disclosure.

The UE calculates the NMSEs corresponding to these two time instants based on the above aspects, and then reports the NMSEs of these two time instants to the gNB or averages these two NMSEs and sends to the gNB. Since the accuracy of CSI prediction is different at different time instants, the gNB may configure the UE with corresponding thresholds of -10 dB and -5 dB at the first and second time instants, respectively. The UE reports the comparison results corresponding to these two time instants to the gNB through the indication information.

In some embodiments, in Option2, the parameters related to the observation window and the prediction window configured by the gNB for the UE are the same as those in Option 1. The UE estimates the full channel information corresponding to different time instants based on the configured parameters, and then predicts full channel information corresponding to different future time instants by using AI model inference and autoregressive AR algorithm (which is a non-AI algorithm), respectively. Like the Option 1, the UE calculates the NMSE1 and NMSE2 corresponding to a certain time instant by equation (1). The NMSE1 and NMSE2 are calculated based on the full channel information recommended by AI model and based on the full channel information predicted by AR algorithm, respectively. The UE reports the NMSE1 and NMSE2 to the gNB, the UE reports a difference or a ratio of the NMSE1 and NMSE2 to the gNB, or the UE directly reports a comparison result between the NMSE1 and NMSE2 to the gNB through the indication information.

In some embodiments, the gNB may configure corresponding threshold(s) for the UE, to enable the UE to report comparison result(s) based on the threshold(s) to the gNB through the indication information.

In some embodiments, in Option3, the UE uses the AR and the AI model inference to predict the full channel information for the future time instants. Assuming rank = 1 (that is, there is one data transmission stream), the gNB configures a Type II codebook for the UE, along with the configured codebook parameter N4 = 1. The UE calculates precoding vectors $v_{1,i}$ and $v_{2,i}$ of rank = 1 at a certain time instant in the future based on the configured codebook parameter information and the calculated full channel information, and then calculate a value of SGCS based on the following equation (2):

$$K_1 = E\left\{\frac{1}{N_3}\sum_{i=1}^{N_3}\left(\frac{\left\|v_{1,i}^{H}\cdot v_{2,i}\right\|}{\left\|v_{1,i}\right\|\left\|v_{2,i}\right\|}\right)^2\right\} \quad (2)$$

where $N_3$ represents the number of precoding sub-bands configured by the gNB for the UE.

For example, the gNB sends a CSI-RS to the UE at a time instant where the CSI is predicted, and the UE calculates its feature vector $v_i$ based on the estimated channel information, and then calculates $K_{1,1}$ and $K_{1,2}$ through the equation (2), where $K_{1,1}$ represents a value of SGCS calculated, by using equation (2), from $v_{1,i}$ and $v_i$ that are obtained through the non-AI algorithm inference, and $K_{1,2}$ represents a value of SGCS calculated, by using equation (2), from $v_{2,i}$ and $v_i$ that are obtained through the AI algorithm inference.

The UE reports the calculated $K_1$, $K_{1,1}$ or $K_{1,2}$ to the gNB, or the UE reports a ratio or a difference between $K_{1,1}$ and $K_{1,2}$ to the gNB, or the UE reports a comparison result between $K_{1,1}$ and $K_{1,2}$ to the gNB through the indication information.

Embodiments of the disclosure provide apparatuses for implementing any of the above methods, For example, an apparatus is provided and the apparatus includes units/modules for implementing steps performed by the terminal in any of the above methods. As another example, another apparatus is provided and the apparatus includes units/modules for implementing steps performed by the network device (e.g., access network device, CN functional node, CN device, etc.) in any of the above methods.

FIG. 8A is a schematic structural diagram illustrating an apparatus for monitoring performance of an AI model according to an embodiment of the disclosure. As illustrated in FIG. 8A, the apparatus includes: a processing module configured to determine reference CSI and prediction CSI, where the reference CSI is used as a reference for AI model performance monitoring, the prediction CSI is predicted by the AI model and corresponds to first prediction time instant(s), and the reference CSI and the prediction CSI are used together in determining performance information of the AI model.

For example, the apparatus further includes: a transceiver module. The transceiver module is configured to implement the relevant steps performed by the terminal in any of the above methods, which will not be repeated here.

For example, the apparatus further includes: at least one of a sending module or a receiving module. The sending module is configured to implement the sending steps performed by the terminal in any of the above methods, and the receiving module is configured to implement the receiving steps performed by the terminal in any of the above methods, which will not be repeated here.

FIG. 8B is a schematic structural diagram illustrating an apparatus for monitoring performance of an AI model according to an embodiment of the disclosure. As illustrated in FIG. 8B, the apparatus includes: a processing module configured to determine performance information of the AI model, where the performance information is determined from reference CSI and prediction CSI, the reference CSI is used as a reference for AI model performance monitoring, and the prediction CSI is predicted by the AI model and corresponds to first prediction time instant(s).

For example, the apparatus further includes: a transceiver module. The transceiver module is configured to implement the relevant steps performed by the network device in any of the above methods, which will not be repeated here.

For example, the apparatus further includes: at least one of a sending module or a receiving module. The sending module is configured to implement the sending steps performed by the network device in any of the above methods, and the receiving module is configured to implement the receiving steps performed by the network device in any of the above methods, which will not be repeated here.

It should be understood that the above units/modules in the above apparatuses are divided based on their logical functions, and some or all of the above units/modules may be integrated on a single physical entity or may be physically separated in practical applications. In addition, the units/modules in the above apparatus may be implemented by software called by a processor. For example, the apparatus includes a processor connected to a memory. The memory stores instructions, and the processor calls the instructions stored in the memory to implement any of the above methods or to implement functions of the units/modules in the above apparatus. The processor may be a general-purpose processor, such as a central processing unit (CPU) or a micro-processor, and the memory is a memory in the apparatus or a memory external to the apparatus. The units/modules in the apparatus may be implemented in the form of a hardware circuit. The functions of some or all of the units/modules may be achieved through the design of the hardware circuit. The hardware circuit may be understood as one or more processors. For example, in an implementation, the hardware circuit is an application-specific integrated circuit (ASIC). The functions of some or all of the units/modules are achieved through the design of logical relationships between components in the circuit. As another example, in another implementation, the hardware circuit may be implemented through a programmable logic device (PLD). Taking a field programmable gate array (FPGA) as an example, a large number of logical gates are included in the FPGA, and their connection relationships are configured through a configuration file, thereby implementing some or all of the functions of the units/modules. All the units/modules of the above apparatus may be implemented entirely through software called by the processor, or entirely through the hardware circuit, or partially through software called by the processor and partially through the hardware circuit.

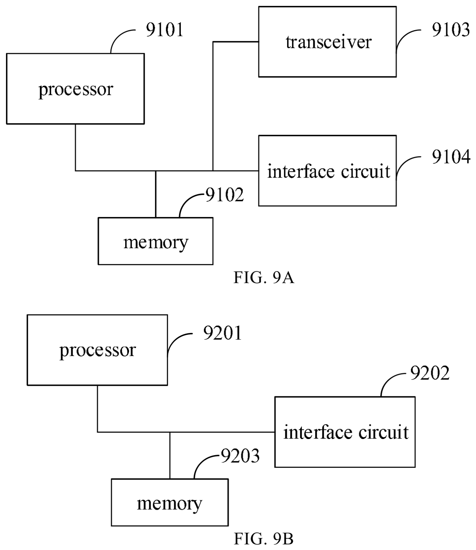

FIG. 9A is a schematic structural diagram illustrating a communication device according to an embodiment of the disclosure. As illustrated in FIG. 9A, the communication device 9100 includes one or more processors 9101. The processor 9101 may be a general-purpose processor or a dedicated processor, such as a baseband processor or a central processor. The baseband processor is used to process communication protocols and communication data, and the central processor is used to control the communication device (e.g., a BS, a baseband chip, a terminal, a terminal chip, a DU or a CU), execute programs, and process data of the programs. The one or more processors 901 is configured to call instructions to enable the communication device 9100 to implement any of the above methods.

In some embodiments, the communication device 9100 further includes one or more memories 9102 for storing instructions. For example, all or part of the memories 9102 may be external to the communication device 9100.

In some embodiments, the communication device 9100 further includes one or more transceivers 9103. When the communication device 9100 includes one or more transceivers 9103, the one or more transceivers 9103 perform the communication steps such as transmitting and/or receiving in the above methods, and other steps are performed by the one or more processors 9101.

In some embodiments, the transceiver may include a receiver and a transmitter. The receiver and the transmitter may be separate or integrated together. For example, the terms "transceiver", "transceiver unit", "transceiver machine" and "transceiver circuit" are interchangeable, and the terms "transmitter", "transmitting unit", "transmitter machine" and "transmitting circuit" are also interchangeable. In addition, the terms "receiver", "receiving unit", "receiver machine" and "receiving circuit" are interchangeable.

For example, the communication device 9100 includes one or more interface circuits 9104. The one or more interface circuits 9104 are connected to the one or more memories 9102. The one or more interface circuits 9104 are used to receive signals from the one or more memories 9102 or other devices and send signals to the one or more memories 9102 or other devices. For example, the one or more interface circuits 9104 read instructions stored in the one or more memories 9102 and send the instructions to the one or more processors 9101.

The communication device 9100 according to embodiments of the disclosure may be a network device or a terminal, the scope of the communication device 9100 is not limited in the disclosure, and the structure of the communication device 9100 is not limited by FIG. 9A. The communication device may be a standalone device or part of a larger device. For example, the communication device may be: (1) a standalone integrated circuit (IC), chip, chip system or subsystem; (2) a collection of one or more ICs (optionally, the collection includes storage components for storing data and programs); (3) an ASIC, such as a modem; (4) a module that can be embedded in other devices; (5) a receiver, a terminal, a smart terminal, a cellular phone, a wireless device, a handheld device, a mobile unit, an in-vehicle device, a network device, a cloud device, an AI device, etc.; or (6) others.

FIG. 9B is a schematic structural diagram illustrating a chip according to an embodiment of the disclosure. For the case that the communication device 9100 is a chip or a chip system, reference may be made to the schematic structural diagram of the chip 9200 illustrated in FIG. 9B, which is not limited herein.

The chip 9200 includes one or more processors 9201, and the one or more processors 9201 are used to call instructions to cause the chip 9200 to perform any of the above methods.

In some embodiments, the chip 9200 includes one or more interface circuits 9202. The one or more interface circuits 9202 are connected to the one or more memories 9203. The one or more interface circuits 9202 are used to receive signals from the one or more memories 9203 or other devices and send signals to the one or more memories 9203 or other devices. For example, the one or more interface circuits 9202 read instructions stored in the one or more memories 9203 and send the instructions to the one or more processors 9201. For example, the terms "interface circuit", "interface", "transceiver pin", "transceiver machine", etc. are interchangeable.

In some embodiments, the chip 9200 further includes the one or more memories 9203 for storing instructions. For example, all or part of the one or more memories 9203 are external to the chip 9200.

The disclosure also provides a storage medium for storing instructions. When the instructions are executed by the communication device 9100, the communication device 9100 is caused to perform any of the above methods. For example, the storage medium is an electronic storage medium. For example, the storage medium is a computer-readable storage medium or may be a storage medium readable by other devices, which is not limited herein. For example, the storage medium may be a non-transitory storage medium or may be a transitory storage medium, which is not limited herein.

In embodiments of the disclosure, the processor is a circuit having signal processing capabilities. In an implementation, the processor may be a circuit for instruction reading and executing, such as a CPU, a micro-processor, a graphics processing unit (GPU) (which is understood as a micro-processor), or a digital signal processor (DSP). In another implementation, the processor implements certain functions through a logical relationship of the hardware circuit. The relationship may be fixed or re-configurable. For example, the processor may be a hardware circuit implemented by an ASIC or a PLD, such as an FPGA. In a re-configurable hardware circuit, the procedure for the processor to load the configuration file to configure the hardware circuit is understood as a procedure for the processor to load instructions to implement some or all of the functions of the above units/modules. In addition, the processor may also be an AI-designed hardware circuit, i.e., an ASIC, such as a neural network processing unit (NPU), a tensor processing unit (TPU) and a deep learning processing unit (DPU).

The disclosure also provides a program product. When the program product is executed by the communication device 9100, the communication device 9100 is caused to perform any of the above methods. For example, the program product is a computer program product.

The disclosure also provides a computer program. When the computer program is executed by a computer, the computer is caused to perform any of the above methods.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure may be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium accessible by the computer or a data storage device integrated by one or more usable mediums such as a server and a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art may realize that the units and algorithmic steps of the various examples described in combination with embodiments of the disclosure are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, for the specific working processes of the systems, apparatuses, and units described above reference may be made to the corresponding processes in the above method embodiments, which will not be repeated herein.

The above are only specific implementations of the disclosure, but the scope of protection of the disclosure is not limited thereto. Those skilled in the art familiar to this technical field may easily think of changes or substitutions in the

**EP 4 742 612 A1**

technical scope of the disclosure, which shall be covered by the scope of protection of the disclosure. Therefore, the scope of protection of the disclosure shall be governed by the scope of protection of the accompanying claims.

**Claims**

1. A method for monitoring performance of an artificial intelligence (AI) model, comprising:
   determining reference channel state information (CSI) and prediction CSI, wherein the reference CSI is used as a reference for AI model performance monitoring, the prediction CSI is predicted by the AI model and corresponds to a first prediction time instant, and the reference CSI and the prediction CSI are used together in determining performance information of the AI model.

2. The method of claim 1, wherein determining the reference CSI comprises at least one of:

   receiving a downlink reference signal sent by a network device at a second prediction time instant, and determining the reference CSI based on the downlink reference signal, wherein the first prediction time instant may be identical to or differ from the second prediction time instant; or
   determining the reference CSI corresponding to the first prediction time instant based on a non-AI model mode, wherein the non-AI model mode is a mode of predicting CSI without relying on the AI model.

3. The method of claim 2, wherein the second prediction time instant is within a prediction window, and

   in a case where there is one second prediction time instant, the second prediction time instant comprises a first one of time instants within the prediction window, a $\left\lceil \frac{w_d}{2} \right\rceil$ th time instant within the prediction window, a $\left\lfloor \frac{w_d}{2} \right\rfloor$ th time instant within the prediction window, or a last one of time instants within the prediction window;
   in a case where there are two second prediction time instants, the second prediction time instants comprise a first one of time instants within the prediction window and a $\left\lceil \frac{w_d}{2} \right\rceil$ th time instant within the prediction window, a first one of time instants within the prediction window and a $\left\lfloor \frac{w_d}{2} \right\rfloor$ th time instant within the prediction window, a $\left\lceil \frac{w_d}{2} \right\rceil$ th time instant within the prediction window and a last one of time instants within the prediction window, a $\left\lfloor \frac{w_d}{2} \right\rfloor$ th time instant within the prediction window and a last one of time instants within the prediction window, or a first one of time instants within the prediction window and a last one of time instants within the prediction window;
   in a case where there are more than two second prediction time instants, the second prediction time instants comprise a ( $\left\lceil \frac{w_d}{L} \right\rceil (l-1) + 1$ )th time instant within the prediction window or a ( $\left\lfloor \frac{w_d}{2} \right\rfloor (l-1) + 1$ )th time instant within the prediction window, wherein *l* = 1, ..., L, and L represents a number of second prediction time instants,
   wherein $w_d$ represents a duration of the prediction window, $\lceil \ \rceil$ represents a ceiling function, and $\lfloor \ \rfloor$ represents a flooring function.

4. The method of any one of claims 1 to 3, further comprising:

   determining a monitored value representing performance of the AI model based on the reference CSI and the prediction CSI; and
   sending first indication information, wherein the first indication information comprises the monitored value and/or information associated with the monitored value.

5. The method of claim 4, wherein determining the monitored value representing the performance of the AI model based on the reference CSI and the prediction CSI comprises at least one of:

   determining a first key performance indicator (KPI) between the reference CSI and the prediction CSI, and determining the first KPI as the monitored value, wherein the reference CSI is estimated based on a downlink reference signal;
   determining a second KPI between the reference CSI and the prediction CSI, and determining the second KPI as

22

the monitored value, wherein the reference CSI is predicted based on a non-AI model mode;

determining a first precoding matrix indicator (PMI) corresponding to the reference CSI, determining a second PMI corresponding to the prediction CSI, determining a third KPI between the first PMI and the second PMI, and determining the third KPI as the monitored value, wherein the reference CSI is predicted based on a non-AI model mode; or

determining a feature vector based on the reference CSI, determining a fourth KPI between the feature vector and a second PMI, and determining the fourth KPI as the monitored value, wherein the reference CSI is estimated based on a downlink reference signal.

6. The method of claim 5, wherein there are a plurality of reference CSI, there are a plurality of prediction CSI, different reference CSI correspond to different first prediction time instants or second prediction time instants, different prediction CSI correspond to different first prediction time instants, there are a plurality of first KPIs and/or a plurality of second KPIs and/or a plurality of third KPIs, and there are a plurality of fourth KPIs.

7. The method of any one of claims 4 to 6, wherein sending the first indication information comprises any one of:

sending one first indication information, wherein the one first indication information comprises a preset number of monitored values and/or information associated with each monitored value; or

sending a preset number of first indication information, wherein each first indication information comprises one monitored value and/or information associated with the one monitored value.

8. The method of claim 7, further comprising at least one of:

receiving second indication information, wherein the second indication information comprises the preset number;

determining the preset number based on a protocol; or

reporting the preset number sent to a network device.

9. The method of any one of claims 4 to 8, wherein the information associated with the monitored value comprises a comparison result between the monitored value and a corresponding monitoring threshold.

10. The method of claim 9, further comprising at least one of:

receiving second indication information, wherein the second indication information comprises the monitoring threshold;

determining the monitoring threshold based on a protocol; or

reporting the monitoring threshold to a network device.

11. The method of any one of claims 1 to 3, further comprising:

obtaining first processed CSI by processing the reference CSI based on a CSI generation section model, and obtaining second processed CSI by processing the prediction CSI based on the CSI generation section model, wherein the first processed CSI and the second processed CSI are used together in determining the performance information of the AI model; and

sending third indication information, wherein the third indication information comprises the first processed CSI and the second processed CSI.

12. The method of claim 11, wherein there are a plurality of reference CSI, different reference CSI correspond to different first prediction time instants or second prediction time instants, and obtaining the first processed CSI by processing the reference CSI based on the CSI generation section model comprises:

obtaining a plurality of first processed CSI by processing the plurality of reference CSI based on the CSI generation section model respectively; or

obtaining one first processed CSI by jointly processing the plurality of reference CSI based on the CSI generation section model.

13. The method of claim 11, wherein there are a plurality of prediction CSI, different prediction CSI correspond to different first prediction time instants, and obtaining the second processed CSI by processing the prediction CSI based on the CSI generation section model comprises:

obtaining a plurality of second processed CSI by processing the plurality of prediction CSI based on the CSI generation section model respectively; or

obtaining one second processed CSI by jointly processing a plurality of prediction CSI based on the CSI generation section model.

14. The method of any one of claims 1 to 3, further comprising:

determining a first precoding matrix indicator (PMI) corresponding to the reference CSI and a second PMI corresponding to the prediction CSI, wherein the first PMI and the second PMI are used together in determining the performance information of the AI model; and

sending third indication information, wherein the third indication information comprises the first PMI and the second PMI.

15. A method for monitoring performance of an artificial intelligence (AI) model, comprising:

determining performance information of the AI model, wherein the performance information is determined from reference channel state information (CSI) and prediction CSI, the reference CSI is used as a reference for AI model performance monitoring, and the prediction CSI is predicted by the AI model and corresponds to a first prediction time instant.

16. The method of claim 15, wherein

the method comprises sending a downlink reference signal to a terminal at a second prediction time instant, wherein the downlink reference signal is used for determining the reference CSI, and the first prediction time instant may be identical to or differ from the second prediction time instant; or

the reference CSI is determined based on a non-AI model mode and corresponds to the first prediction time instant, wherein the non-AI model mode is a mode of predicting CSI without relying on the AI model.

17. The method of claim 16, wherein the second prediction time instant is within a prediction window, and

in a case where there is one second prediction time instant, the second prediction time instant comprises a first one of time instants within the prediction window, a $\left\lceil \frac{w_d}{2} \right\rceil$ th time instant within the prediction window, a $\left\lfloor \frac{w_d}{2} \right\rfloor$ th time instant within the prediction window, or a last one of time instants within the prediction window;

in a case where there are two second prediction time instants, the second prediction time instants comprise a first one of time instants within the prediction window and a $\left\lceil \frac{w_d}{2} \right\rceil$ th time instant within the prediction window, a first one of time instants within the prediction window and a $\left\lfloor \frac{w_d}{2} \right\rfloor$ th time instant within the prediction window, a $\left\lceil \frac{w_d}{2} \right\rceil$ th time instant within the prediction window and a last one of time instants within the prediction window, a $\left\lfloor \frac{w_d}{2} \right\rfloor$ th time instant within the prediction window and a last one of time instants within the prediction window, or a first one of time instants within the prediction window and a last one of time instants within the prediction window;

in a case where there are more than two second prediction time instants, the second prediction time instants comprise a $\left( \left\lceil \frac{w_d}{L} \right\rceil (l-1) + 1 \right)$ th time instant within the prediction window or a $\left( \left\lfloor \frac{w_d}{2} \right\rfloor (l-1) + 1 \right)$ th time instant within the prediction window, wherein $l$ = 1, ..., L, and L represents a number of second prediction time instants;

wherein $w_d$ represents a duration of the prediction window, $\lceil \rceil$ represents a ceiling function, and $\lfloor \rfloor$ represents a flooring function .

18. The method of any one of claims 15 to 17, wherein determining the performance information of the AI model comprises:

receiving first indication information, wherein the first indication information comprises a monitored value and/or information associated with the monitored value representing performance of the AI model, and the monitored value is determined from the reference CSI and the prediction CSI; and

determining the performance information based on the monitored value and/or the information associated with the monitored value.

19. The method of claim 18, wherein the monitored value comprises at least one of:

a first key performance indicator (KPI) between the reference CSI and the prediction CSI, wherein the reference CSI is estimated based on a downlink reference signal;
a second KPI between the reference CSI and the prediction CSI, wherein the reference CSI is predicted based on a non-AI model mode;
a third KPI between a first precoding matrix indicator (PMI) corresponding to the reference CSI and a second PMI corresponding to the prediction CSI, wherein the reference CSI is predicted based on a non-AI model mode; or
a fourth KPI between a feature vector determined based on the reference CSI and a second PMI, wherein the reference CSI is estimated based on a downlink reference signal.

20. The method of claim 19, wherein there are a plurality of reference CSI, there are a plurality of prediction CSI, different reference CSI correspond to different first prediction time instants or second prediction time instants, different prediction CSI correspond to different first prediction time instants, there are a plurality of first KPIs and/or a plurality of second KPIs and/or a plurality of third KPIs, and there are a plurality of fourth KPIs.

21. The method of any one of claims 18 to 20, wherein receiving the first indication information comprises:

receiving one first indication information, wherein the one first indication information comprises a preset number of monitored values and/or information associated with each monitored value; or
receiving a preset number of first indication information, wherein each first indication information comprises one monitored value and/or information associated with the one monitored value.

22. The method of claim 21, comprising at least one of:

sending second indication information, wherein the second indication information comprises the preset number;
determining the preset number based on a protocol; or
receiving the preset number reported by the terminal.

23. The method of any one of claims 18 to 22, wherein the information associated with the monitored value comprises a comparison result between the monitored value and a corresponding monitoring threshold.

24. The method of claim 23, further comprising at least one of:

sending second indication information, wherein the second indication information comprises the monitoring threshold;
determining the monitoring threshold based on a protocol; or
receiving the monitoring threshold reported by the terminal.

25. The method of any one of claims 15 to 17, wherein determining the performance information of the AI model comprises:

receiving third indication information, wherein the third indication information comprises first processed CSI and second processed CSI, the first processed CSI is obtained by processing the reference CSI based on a CSI generation section model, and the second processed CSI is obtained by processing the prediction CSI based on the CSI generation section model;
obtaining the reference CSI by processing the first processed CSI based on a CSI recovery section model, and obtaining the prediction CSI by processing the second processed CSI based on the CSI recovery section model; and
determining the performance information of the AI model based on the reference CSI and the prediction CSI.

26. The method of claim 25, wherein there are one or more first processed CSI, and obtaining the reference CSI by processing the first processed CSI based on the CSI recovery section model comprises:

obtaining a plurality of reference CSI by processing one first processed CSI based on the CSI recovery section model; or

obtaining a plurality of reference CSI by processing a plurality of first processed CSI based on the CSI recovery section model respectively.

27. The method of claim 25, wherein there are one or more second processed CSI, and obtaining the prediction CSI by processing the second processed CSI based on the CSI recovery section model comprises:

obtaining a plurality of prediction CSI by processing one second processed CSI based on the CSI recovery section model; or
obtaining a plurality of prediction CSI by processing a plurality of second processed CSI based on the CSI recovery section model respectively.

28. The method of any one of claims 15 to 17, wherein determining the performance information of the AI model comprises:

receiving third indication information, wherein the third indication information comprises a first precoding matrix indicator (PMI) corresponding to the reference CSI and a second PMI corresponding to the prediction CSI; and determining the performance information of the AI model based on the first PMI and the second PMI.

29. An apparatus for monitoring performance of an artificial intelligence (AI) model, comprising:
a processing module, configured to determine reference channel state information (CSI) and prediction CSI, wherein the reference CSI is used as a reference for AI model performance monitoring, the prediction CSI is predicted by the AI model and corresponds to a first prediction time instant, and the reference CSI and the prediction CSI are used together in determining performance information of the AI model.

30. An apparatus for monitoring performance of an artificial intelligence (AI) model, comprising:
a processing module, configured to determine performance information of the AI model, wherein the performance information is determined by reference channel state information (CSI) and prediction CSI, the reference CSI is used as a reference for AI model performance monitoring, and the prediction CSI is predicted by the AI model and corresponds to a first prediction time instant.

31. A communication device, comprising:

one or more processors;
wherein the one or more processors are configured to call instructions to cause the communication device to implement the method of any one of claims 1 to 28.

32. A communication system, comprising a network device and a terminal, wherein the terminal is configured to implement the method of any one of claims 1 to 14, and the terminal is configured to implement the method of any one of claims 15 to 28.

33. A storage medium, having instructions stored thereon, wherein when the instructions are executed by a communication device, the communication device is caused to implement the method of any one of claims 1 to 28.

FIG. 1

FIG. 2

network device

terminal

S3101, the network device sends a downlink RS to the terminal at a second prediction time instant

S3102, the terminal determines reference CSI based on the downlink RS

S3103, the terminal determines prediction CSI, where the prediction CSI is predicted by the AI model and corresponds to a first prediction time instant

S3104, the terminal determines the monitored value representing the performance of the AI model based on the reference CSI and the prediction CSI

S3105, the terminal sends first indication information, where the first indication information includes the monitored value and/or information associated with the monitored value

S3106, the network device determines the performance information based on the monitored value and/or the information associated with the monitored value

FIG. 3A

| network device | | terminal |
|---|---|---|

S3201,the terminal determines reference CSI corresponding to a first prediction time instant based on a non-AI model mode, where the non-AI model mode is a mode of predicting CSI without relying on the AI model

S3202, the terminal determines prediction CSI, where the prediction CSI is predicted by the AI model and corresponds to the first prediction time instant

S3203, the terminal determines a monitored value representing the performance of the AI model based on the reference CSI and the prediction CSI

S3204, the terminal sends first indication information, where the first indication information includes a monitored value and/or information associated with the monitored value

S3205, the network device determines the performance information based on the monitored value and/or the information associated with the monitored value

FIG. 3B

| network device | | terminal |
|---|---|---|

S3301, the terminal determines reference CSI and prediction CSI

S3302, the terminal obtains first processed CSI by processing the reference CSI based on a CSI generation section model, and obtains second processed CSI by processing the prediction CSI based on the CSI generation section model, where the first processed CSI and the second processed CSI are used together in determining the performance information of the AI model

S3303, the terminal sends third indication information, where the third indication information includes the first processed CSI and the second processed CSI

S3304, the network device processes the first processed CSI based on the CSI recovery section model to obtain the reference CSI, and processes the second processed CSI based on the CSI recovery section model to obtain the prediction CSI

S3305, the network device determines the performance information of the AI model based on the reference CSI and the prediction CSI

FIG. 3C

network device

terminal

S3401, the terminal determines reference CSI and prediction CSI

S3402, the terminal determines a first PMI corresponding to the reference CSI and a second PMI corresponding to the prediction CSI, where the first PMI and the second PMI are used together in determining the performance information of the AI model

S3403, the terminal sends third indication information, where the third indication information includes the first PMI and the second PMI

S3404, the network device determines the performance information of the AI model based on the first PMI and the second PMI

FIG. 3D

S4101

S4101, determine reference CSI and prediction CSI, where the reference CSI is used as a reference for AI model performance monitoring, the prediction CSI is predicted by the AI model and corresponds to a first prediction time instant, and the reference CSI and the prediction CSI are used together in determining performance information of the AI model

FIG. 4A

determine reference CSI and prediction CSI, where the reference CSI is used as a reference for AI model performance monitoring, the prediction CSI is predicted by the AI model and corresponds to a first prediction time instant, and the reference CSI and the prediction CSI are used together in determining performance information of the AI model — S4201

determine a monitored value representing the performance of the AI model based on the reference CSI and the prediction CSI — S4202

send first indication information, where the first indication information includes the monitored value and/or information associated with the monitored value — S4203

FIG. 4B

determine reference CSI and prediction CSI, where the reference CSI is used as a reference for AI model performance monitoring, the prediction CSI is predicted by the AI model and corresponds to a first prediction time instant, and the reference CSI and the prediction CSI are used together in determining performance information of the AI model — S4301

obtain first processed CSI by processing the reference CSI based on a CSI generation section model, and obtain second processed CSI by processing the prediction CSI based on the CSI generation section model, where the first processed CSI and the second processed CSI are used together in determining the performance information of the AI model — S4302

send third indication information, in which the third indication information includes the first processed CSI and the second processed CSI — S4303

FIG. 4C

determine performance information of the AI model, where the performance information is determined from reference CSI and prediction CSI, the reference CSI is used as a reference for AI model performance monitoring, and the prediction CSI is predicted by the AI model and corresponds to a first prediction time instant — S5101

FIG. 5A

receive first indication information, where the first indication information includes a monitored value and/or information associated with the monitored value representing the performance of the AI model, and the monitored value is determined from reference CSI and prediction CSI — S5201

determine performance information based on the monitored value and/or the information associated with the monitored value — S5202

FIG. 5B

receive third indication information, where the third indication information includes first processed CSI and second processed CSI, the first processed CSI is obtained by processing the reference CSI based on a CSI generation section model, and the second processed CSI is obtained by processing the prediction CSI based on the CSI generation section model

S5301

obtain the reference CSI by processing the first processed CSI based on a CSI recovery section model, and obtain the prediction CSI by processing the second processed CSI based on the CSI recovery section model

S5302

determine performance information of the AI model based on the reference CSI and the prediction CSI

S5303

FIG. 5C

observation window

N=4 CSI-RS

prediction window

K=4 CSI

M=4 slots

D=4 slots

t

FIG. 6

observation window

N=4 CSI-RS

prediction window

K=4 CSI

M=4 slots

D=8 slots

t

FIG. 7

apparatus for monitoring performance of an AI model

processing module

FIG. 8A

apparatus for monitoring performance of an AI model

processing module

FIG. 8B

FIG. 9A

FIG. 9B

## INTERNATIONAL SEARCH REPORT

| International application No. |
| --- |
| **PCT/CN2023/105971** |

### A. CLASSIFICATION OF SUBJECT MATTER

H04L41/16(2022.01)i

According to International Patent Classification (IPC) or to both national classification and IPC

### B. FIELDS SEARCHED

Minimum documentation searched (classification system followed by classification symbols)

IPC:H04L H04W H04B

Documentation searched other than minimum documentation to the extent that such documents are included in the fields searched

Electronic data base consulted during the international search (name of data base and, where practicable, search terms used)

3GPP, CNTXT, ENTXT, DWPI, CNKI, IEEE: AI, 模型, 评估, 性能, 预测, 检测, 监测, 时刻, 时间, 窗, 参考信号, 门限, 阈值, RS, signal, window, PMI, detect, CSI, KPI, model, performance, predict+, threshold

### C. DOCUMENTS CONSIDERED TO BE RELEVANT

| Category* | Citation of document, with indication, where appropriate, of the relevant passages | Relevant to claim No. |
| --- | --- | --- |
| X | CN 116170091 A (HUAWEI TECHNOLOGIES CO., LTD.) 26 May 2023 (2023-05-26) description, paragraphs 124-249 | 1-33 |
| X | CN 116210181 A (QUALCOMM INC.) 02 June 2023 (2023-06-02) description, paragraphs 47-102 | 1-33 |
| X | HUAWEI et al. "Discussion on general aspects of AI/ML framework" *3GPP TSG-RAN WG1 Meeting #112, R1-2300107,* 03 March 2023 (2023-03-03), text, section 2 | 1-33 |
| A | WO 2023026413 A1 (NTT DOCOMO, INC.) 02 March 2023 (2023-03-02) entire document | 1-33 |
| A | ZTE. "Evaluation on AI CSI feedback enhancement" *3GPP TSG RAN WG1 #112, R1-2300171,* 03 March 2023 (2023-03-03), entire document | 1-33 |

☑ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **08 December 2023** | **20 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/105971** |

**C.    DOCUMENTS CONSIDERED TO BE RELEVANT**

| Category* | Citation of document, with indication, where appropriate, of the relevant passages | Relevant to claim No. |
|---|---|---|
| A | OPPO. "Evaluation methodology and preliminary results on AI/ML for CSI feedback enhancement"<br>*3GPP TSG-RAN WG1 Meeting #112, R1-2300280*, 03 March 2023 (2023-03-03),<br>      entire document | 1-33 |

Form PCT/ISA/210 (second sheet) (July 2022)

## INTERNATIONAL SEARCH REPORT
**Information on patent family members**

International application No.

**PCT/CN2023/105971**

| Patent document cited in search report | | | Publication date (day/month/year) | Patent family member(s) | | | Publication date (day/month/year) |
|---|---|---|---|---|---|---|---|
| CN | 116170091 | A | 26 May 2023 | WO | 2023093725 | A1 | 01 June 2023 |
| CN | 116210181 | A | 02 June 2023 | US | 2021376895 | A1 | 02 December 2021 |
| | | | | WO | 2021242393 | A1 | 02 December 2021 |
| | | | | EP | 4158810 | A1 | 05 April 2023 |
| | | | | IN | 202227054479 | A | 06 January 2023 |
| WO | 2023026413 | A1 | 02 March 2023 | | None | | |

Form PCT/ISA/210 (patent family annex) (July 2022)